# EUROPEAN PATENT SPECIFICATION

(11) **EP 3 605 083 B1**
(45) Date of publication and mention of the grant of the patent: **10.05.2023**
(21) Application number: 18774964.3
(22) Date of filing: 19.03.2018
(51) Int. Cl.: G01N 29/26, G01N 29/04, G01N 29/28, G01N 29/30, G01N 29/44

(54) **DEFECT DETECTION DEVICE, DEFECT DETECTION METHOD, AND PROGRAM**
FEHLERERKENNUNGSVORRICHTUNG, FEHLERERKENNUNGSVERFAHREN UND PROGRAMM
DISPOSITIF DE DÉTECTION DE DÉFAUT, PROCÉDÉ DE DÉTECTION DE DÉFAUT, ET PROGRAMME

(30) Priority: 29.03.2017 JP 2017064779
(43) Date of publication of application: 05.02.2020
(73) Proprietor: Nippon Steel Corporation, Tokyo 100-8071 (JP)
(72) Inventor: UEDA, Yoshio, Tokyo 100-8071 (JP); OKAMOTO, Kohei, Tokyo 100-8071 (JP); YAMANO, Masaki, Tokyo 100-8071 (JP); HASEGAWA, Noboru, Tokyo 100-8071 (JP); AOKI, Hiromichi, Tokyo 100-8071 (JP)
(74) Representative: Vossius & Partner Patentanwälte Rechtsanwälte mbB
(86) International application number: PCT/JP2018/010786
(87) International publication number: WO 2018/180697

(56) References cited:
- EP-A1- 2 116 847
- EP-A1- 2 124 045
- JP-A- S62 192 653
- JP-A- 2003 262 622
- JP-A- 2012 242 160
- JP-A- 2016 038 361
- JP-A- 2016 095 194
- JP-B2- 5 590 249

## Description

### TECHNICAL FIELD

The present invention relates to a defect detection device and a defect detection method that detect a defect present in a welded part formed along a pipe longitudinal of a welded-steel pipe, and a program for causing a computer to execute this defect detection method.

### BACKGROUND ART

In a welded steel pipe such as an electric resistance welded steel pipe, the quality of a welded part (weld surface) is extremely important. As an art to determine whether or not a defect is present in a welded part of a welded steel pipe, there is an art described in Patent Literature 1, for example. Concretely, Patent Literature 1 describes an art in which ultrasonic beams are transmitted toward a welded part through an outer surface of a welded steel pipe from a flaw detection ultrasonic element group consisting of some ultrasonic elements of a plurality of ultrasonic elements composing a phased array probe, the ultrasonic beams reflected by the welded steel pipe including the welded part are received via the flaw detection ultrasonic element group that has transmitted the ultrasonic beams, and based on the received ultrasonic beams, whether or not a defect is present in the welded part is determined.
Patent Literature 2 describes a defect detection device comprising a phased array probe, a transmitter, a receptor, and a defect determination unit.
Patent Literature 3 describes a calibration method of an ultrasonic flaw detection.
Patent Literature 4 describes an ultrasonic flaw detection apparatus for detecting a minute flaw generated in a welded portion of a welded steel pipe.

### CITATION LIST

### PATENT LITERATURE

Patent Literature 1: Japanese Laid-open Patent Publication No. 2016-38361
Patent Literature 2: WO 2014/007023 A1
Patent Literature 3: EP 2 116 847 A1
Patent Literature 4: EP 2 124 045 A1

### SUMMARY OF INVENTION

### TECHNICAL PROBLEM

When performing a defect inspection of a welded part in a manufacturing process of a welded steel pipe, the position of the welded part is sometimes displaced in the circumferential direction of the welded steel pipe depending on the welded steel pipe. Regarding this point, in the art described in Patent Literature 1, the reflected ultrasonic beams reflected by the welded steel pipe including the welded part are received by using the same ultrasonic element group as the ultrasonic element group that has transmitted the ultrasonic beams toward the welded part, so that it is difficult to properly receive the reflected ultrasonic beams from a defect present in the welded part in the case where the position of the welded part is displaced in the circumferential direction of the welded steel pipe from an expected position. That is, the art described in Patent Literature 1 has caused a problem that the accuracy of detecting the defect decreases in the case where the position of the welded part is displaced in the circumferential direction of the welded steel pipe from an expected position.

The present invention has been made in consideration of such problems, and an object thereof is to provide, when performing a defect inspection of a welded part of a welded steel pipe using a phased array probe, a mechanism capable of suppressing a decrease in accuracy of detecting a defect in the case where the position of the welded part is displaced in the circumferential direction of the welded steel pipe from an expected position.

### SOLUTION TO PROBLEM

The present invention is defined in the claims. A defect detection device of the present invention is a defect detection device that detects a defect present in a welded part formed along a pipe longitudinal of a welded steel pipe, the device including: a phased array probe that is installed outside an outer surface of the welded steel pipe and includes a plurality of ultrasonic elements arranged therein; a transmission means configured to set n pieces of the ultrasonic elements, being some of a plurality of the ultrasonic elements composing the phased array probe, as transmission ultrasonic elements and transmits ultrasonic beams toward the welded part through the outer surface of the welded steel pipe from the transmission ultrasonic elements; a reception means configured to receive reflected ultrasonic beans being the ultrasonic beams reflected by the welded steel pipe including the welded part via reception ultrasonic elements consisting of m pieces, being larger than n pieces, of the ultrasonic elements including n pieces of the ultrasonic elements composing the transmission ultrasonic elements out of a plurality of the ultrasonic elements composing the phased array probe; and a defect determination means configured to determine whether or not a defect is present in the welded part based on the reflected ultrasonic beams received by the reception means.

Further, the present invention includes a defect detection method by the above-described defect detection device and a program for causing a computer to execute this defect detection method.

### ADVANTAGEOUS EFFECTS OF INVENTION

According to the present invention, it is possible to, when performing a defect inspection of a welded part of a welded steel pipe using a phased array probe, suppress a decrease in accuracy of detecting a defect in the case where the position of the welded part is displaced in the circumferential direction of the welded steel pipe from an expected position.

### BRIEF DESCRIPTION OF DRAWINGS

[Fig. 1] Fig. 1 is a view illustrating one example of a schematic configuration of a defect detection device according to an embodiment of the present invention.
[Fig. 2A] Fig. 2A is a view illustrating the embodiment of the present invention and illustrating one example of a method of determining a position of a welded part illustrated in Fig. 1.
[Fig. 2B] Fig. 2B is a view illustrating the embodiment of the present invention and illustrating one example of the method of determining the position of the welded part illustrated in Fig. 1.
[Fig. 2C] Fig. 2C is a view illustrating the embodiment of the present invention and illustrating one example of the method of determining the position of the welded part illustrated in Fig. 1.
[Fig. 3A] Fig. 3A is a view illustrating a state of the case where ultrasonic beams are transmitted to the position of the welded part determined by the method illustrated in Fig. 2C from a phased array probe illustrated in Fig. 1.
[Fig. 3B] Fig. 3B is a view illustrating a state of the case where ultrasonic beams are transmitted to the position of the welded part determined by the method illustrated in Fig. 2C from the phased array probe illustrated in Fig. 1.
[Fig. 4] Fig. 4 is a view illustrating the embodiment of the present invention and illustrating setting examples of a transmission delay pattern of transmission ultrasonic elements relating to transmission of ultrasonic beams and a reception delay pattern of reception ultrasonic elements relating to reception of reflected ultrasonic beams by a transmission/reception control unit in Fig. 1.
[Fig. 5] Fig. 5 is a view illustrating the embodiment of the present invention and illustrating a state of transmitting ultrasonic beams toward a calibration pipe for calibrating a welded steel pipe in Fig. 1 from the phased array probe in Fig. 1.
[Fig. 6] Fig. 6 is a view illustrating a reference example and illustrating an SN ratio relating to reflected ultrasonic beams from an artificial defect in the case where a number n of the transmission ultrasonic elements illustrated in Fig. 5 is changed sequentially and the reception ultrasonic elements are the same as the transmission ultrasonic elements.
[Fig. 7] Fig. 7 is a view illustrating the embodiment of the present invention and illustrating a B scanned image relating to the reflected ultrasonic beam received by each ultrasonic element of the phased array probe in which the number n of the transmission ultrasonic elements illustrated in Fig. 5 is set to a predetermined number.
[Fig. 8] Fig. 8 is a view illustrating the embodiment of the present invention and in which the maximum signal intensity of defect echos received by the ultrasonic elements (with element numbers of 1 ch to 64 ch) of the phased array probe in the case of Fig. 7 is illustrated as a defect echo height.
[Fig. 9A] Fig. 9A is a view illustrating the embodiment of the present invention and illustrating one example of acquisition processing of SN ratio information stored in a storage unit in Fig. 1.
[Fig. 9B] Fig. 9B is a view illustrating the embodiment of the present invention and illustrating one example of the acquisition processing of the SN ratio information stored in the storage unit in Fig. 1.
[Fig. 9C] Fig. 9C is a view illustrating the embodiment of the present invention and illustrating one example of the acquisition processing of the SN ratio information stored in the storage unit in Fig. 1.
[Fig. 9D] Fig. 9D is a view illustrating the embodiment of the present invention and illustrating one example of the acquisition processing of the SN ratio information stored in the storage unit in Fig. 1.
[Fig. 10] Fig. 10 is a view illustrating the embodiment of the present invention and illustrating one example of the SN ratio information stored in the storage unit in Fig. 1.
[Fig. 11] Fig. 11 is a flowchart illustrating one example of processing procedures of a defect detection method by the defect detection device according to the embodiment of the present invention.
[Fig. 12A] Fig. 12A is a view illustrating a first example of the case where the defect detection device according to the embodiment of the present invention performs defect detection processing by focusing ultrasonic beams on a predetermined focusing region in a thickness direction of the welded steel pipe.
[Fig. 12B] Fig. 12B is a view illustrating the first example of the case where the defect detection device according to the embodiment of the present invention performs the defect detection processing by focusing ultrasonic beams on a predetermined focusing region in the thickness direction of the welded steel pipe.
[Fig. 12C] Fig. 12C is a view illustrating the first example of the case where the defect detection device according to the embodiment of the present invention performs the defect detection processing by focusing ultrasonic beams on a predetermined focusing region in the thickness direction of the welded steel pipe.
[Fig. 13A] Fig. 13A is a view illustrating a second example of the case where the defect detection device according to the embodiment of the present invention performs the defect detection processing by focusing ultrasonic beams on a predetermined focusing region in the thickness direction of the welded steel pipe.
[Fig. 13B] Fig. 13B is a view illustrating the second example of the case where the defect detection device according to the embodiment of the present invention performs the defect detection processing by focusing ultrasonic beams on a predetermined focusing region in the thickness direction of the welded steel pipe.
[Fig. 13C] Fig. 13C is a view illustrating the second example of the case where the defect detection device according to the embodiment of the present invention performs the defect detection processing by focusing ultrasonic beams on a predetermined focusing region in the thickness direction of the welded steel pipe.
[Fig. 141 Fig. 14 is a flowchart illustrating one example of detailed processing procedures of first setting processing of the reception ultrasonic elements at Step S4 in Fig. 11.

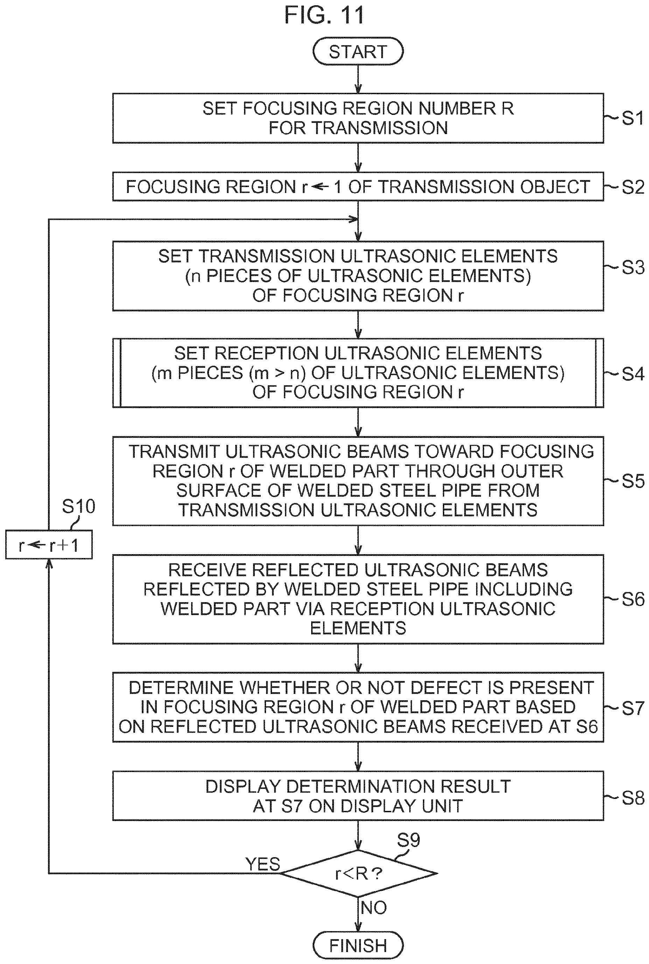

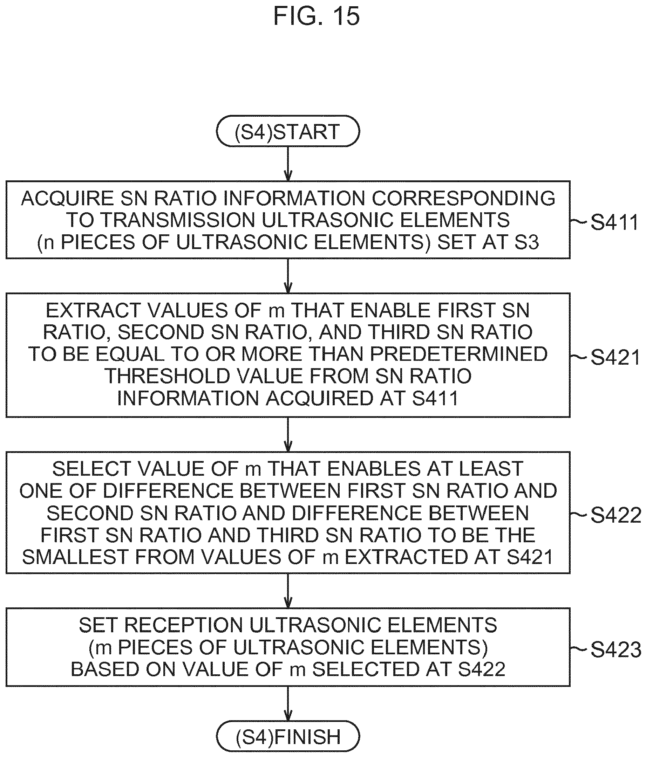

[Fig. 15] Fig. 15 is a flowchart illustrating one example of detailed processing procedures of second setting processing of the reception ultrasonic elements at Step S4 in Fig. 11.

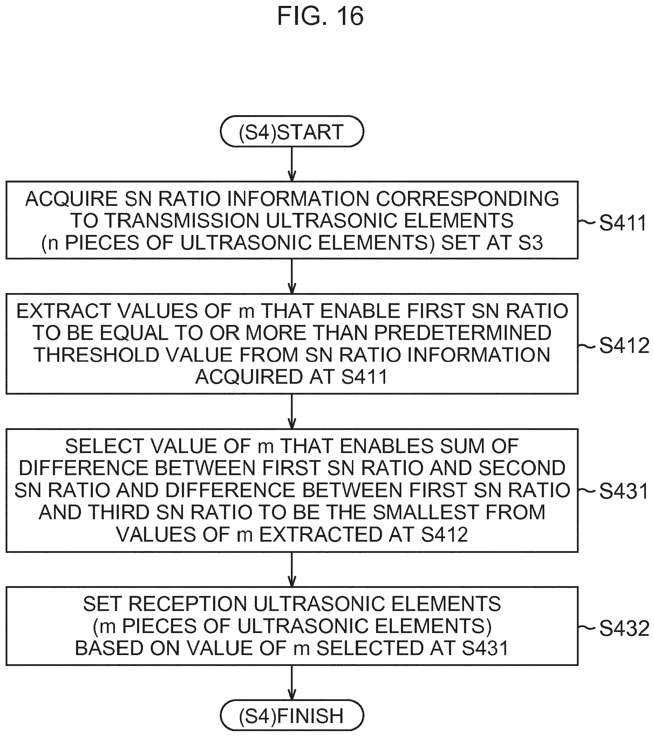

[Fig. 16] Fig. 16 is a flowchart illustrating one example of detailed processing procedures of third setting processing of the reception ultrasonic elements at Step S4 in Fig. 11.

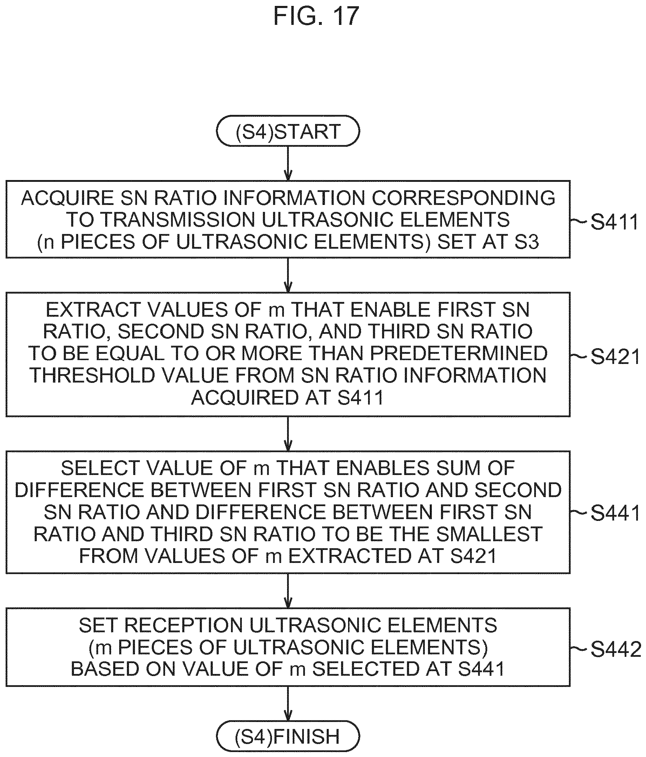

[Fig. 17] Fig. 17 is a flowchart illustrating one example of detailed processing procedures of fourth setting processing of the reception ultrasonic elements at Step S4 in Fig. 11.

### DESCRIPTION OF EMBODIMENTS

Hereinafter, there will be explained a mode for implementing the present invention (embodiment) with reference to the drawings.

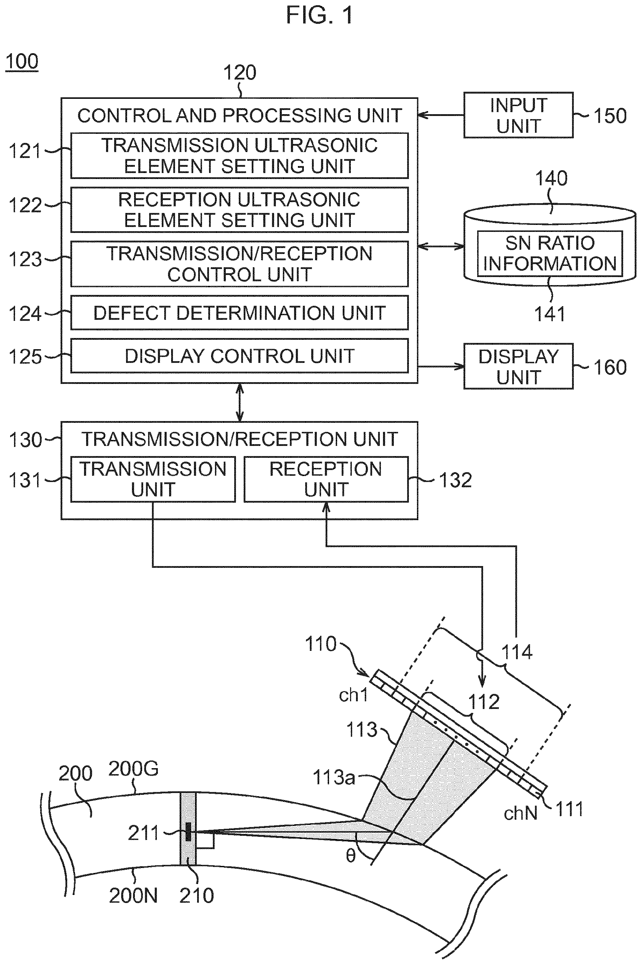

Fig. 1 is a view illustrating one example of a schematic configuration of a defect detection device 100 according to the embodiment of the present invention. This defect detection device 100 is a device for detecting a defect 211 present in a welded part (weld surface) 210 formed along a pipe longitudinal of a welded steel pipe 200 such as an electric resistance welded steel pipe. Further, Fig. 1 illustrates a cross section of the welded steel pipe 200 (the vicinity of a welded part 210 of the cross section of the welded steel pipe in more detail). Incidentally, the example where the defect 211 is present inside the welded part 210 is illustrated in Fig. 1 in order to make the explanation easily understandable, but depending on the welded steel pipe 200, the defect 211 is sometimes not present inside the welded part 210. Further, in this embodiment, the outside diameter of the welded steel pipe 200 is preferably 38.1 mm to 114.3 mm, for example, and the thickness (the length between an outer surface 200G and an inner surface 200N) of the welded steel pipe 200 is preferably 1.6 mm to 10 mm, for example.

The defect detection device 100 according to this embodiment is configured to include a phased array probe 110, a control and processing unit 120, a transmission/reception unit 130, a storage unit 140, an input unit 150, and a display unit 160 as illustrated in Fig. 1.

The phased array probe 110 is installed outside the outer surface 200G of the welded steel pipe 200 and is formed by having a plurality of ultrasonic elements 111 arranged therein. Concretely, Fig. 1 illustrates an example where as a plurality of the ultrasonic elements 111 composing the phased array probe 110, N pieces of ultrasonic elements with ch 1 to ch N are formed. Further, Fig. 1 illustrates, out of a plurality of the ultrasonic elements 111 composing the phased array probe 110, transmission ultrasonic elements 112 that transmit ultrasonic beams 113 toward the welded part 210 through the outer surface 200G of the welded steel pipe 200. On this occasion, the ultrasonic beams 113 illustrated in Fig. 1 are illustrated so as to focus on one point of the welded part 210, but this merely illustrates a path in terms of setting, and it is actually possible that the ultrasonic beams 113 do not focus on one point of the welded part 210 depending on the specifications of the phased array probe 110 (for example, the width, frequency, number, or the like of the ultrasonic element 111). Therefore, in this embodiment, in the thickness direction of the welded steel pipe 200, a portion where the ultrasonic beams 113 focus on the welded part 210 is described as a focusing region. Further, Fig. 1 illustrates, out of a plurality of the ultrasonic elements 111 composing the phased array probe 110, reception ultrasonic elements 114 that receive reflected ultrasonic beams being the ultrasonic beams 113 reflected by the welded steel pipe 200 including the welded part 210 (to be sometimes described as "reflected ultrasonic beams" simply below). Further, between the phased array probe 110 and the outer surface 200G of the welded steel pipe 200, for example, water exists as a medium for efficiently propagating the ultrasonic beams 113.

The control and processing unit 120 controls configuration units of the defect detection device 100 and integrally controls operations of the defect detection device 100 based on input information input from the input unit 150, for example. Further, the control and processing unit 120 performs various pieces of processing based on input information input from the input unit 150, for example. The control and processing unit 120 is configured to include a transmission ultrasonic element setting unit 121, a reception ultrasonic element setting unit 122, a transmission/reception control unit 123, a defect determination unit 124, and a display control unit 125 as illustrated in Fig. 1.

The transmission ultrasonic element setting unit 121 sets n pieces of the ultrasonic elements, being some of a plurality of the ultrasonic elements 111 (N pieces in the example illustrated in Fig. 1) composing the phased array probe 110, as the transmission ultrasonic elements 112 based on input information input from the input unit 150, for example.

The reception ultrasonic element setting unit 122 sets, out of a plurality of the ultrasonic elements 111 composing the phased array probe 110, m pieces, being larger than n pieces, of the ultrasonic elements including n pieces of the ultrasonic elements relating to the transmission ultrasonic elements 112 as the reception ultrasonic elements 114 based on input information input from the input unit 150, for example. On this occasion, the reception ultrasonic element setting unit 122 sets the reception ultrasonic elements 114 in consideration of SN ratio information 141 stored in the storage unit 140.

The transmission/reception control unit 123 controls the transmission/reception unit 130 based on input information input from the input unit 150 and information set in the transmission ultrasonic element setting unit 121 and the reception ultrasonic element setting unit 122, for example. Concretely, the transmission/reception control unit 123 controls a transmission unit 131 in the transmission/reception unit 130 to cause the transmission ultrasonic elements 112 set by the transmission ultrasonic element setting unit 121 to transmit the ultrasonic beams 113. Further, the transmission/reception control unit 123 controls a reception unit 132 in the transmission/reception unit 130 to cause the reception ultrasonic elements 114 set by the reception ultrasonic element setting unit 122 to receive the reflected ultrasonic beams.

The defect determination unit 124 determines whether or not the defect 211 is present in the welded part 210 based on the reflected ultrasonic beams received by the reception unit 132 in the transmission/reception unit 130.

The display control unit 125 performs a control of displaying a determination result of the defect 211 by the defect determination unit 124 on the display unit 160. Further, the display control unit 125 performs a control of displaying various pieces of information on the display unit 160 as necessary.

The transmission/reception unit 130 transmits and receives ultrasonic beams to and from the welded steel pipe 200 based on the control of the transmission/reception control unit 123. The transmission/reception unit 130 is configured to include the transmission unit 131 and the reception unit 132. The transmission unit 131 performs processing to transmit the ultrasonic beams 113 from the transmission ultrasonic elements 112 set by the transmission ultrasonic element setting unit 121 out of a plurality of the ultrasonic elements 111 composing the phased array probe 110. In this embodiment, the transmission unit 131 performs processing to transmit the ultrasonic beams 113 from the transmission ultrasonic elements 112 to make the ultrasonic beams 113 that have entered the welded steel pipe through the outer surface 200G of the welded steel pipe 200 directly incident on the welded part 210 substantially vertically without reflecting on the inner surface 200N of the welded steel pipe 200 to focus on the welded part 210 based on the control of the transmission/reception control unit 123. Concretely, in this embodiment, the transmission unit 131 transmits the ultrasonic beam 113 from the transmission ultrasonic element 112 to refract the ultrasonic beam 113 at an angle *θ* (about 70° in the example illustrated in Fig. 1) relative to an incident axis 113a on the outer surface 200G of the welded steel pipe 200 and make it directly incident on the welded part 210 substantially vertically without reflecting on the inner surface 200N of the welded steel pipe 200. Further, the reception unit 132 performs processing to receive the reflected ultrasonic beams via the reception ultrasonic elements 114 set by the reception ultrasonic element setting unit 122 out of a plurality of the ultrasonic elements 111 composing the phased array probe 110.

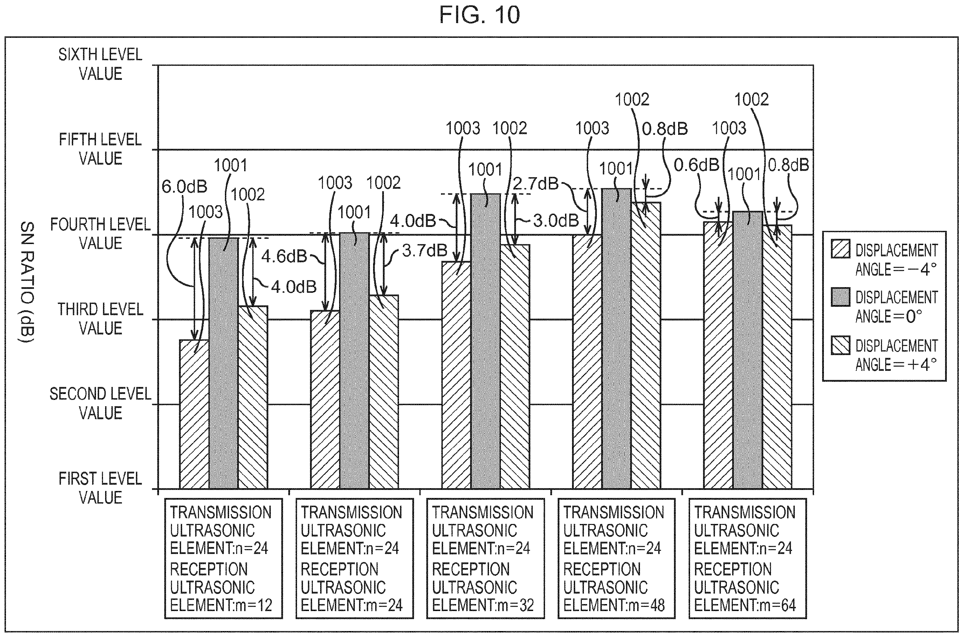

The storage unit 140 stores the SN ratio information 141 to be used when the reception ultrasonic element setting unit 122 sets the reception ultrasonic element 114. The SN ratio information 141 will be described later using Fig. 10. Further, the storage unit 140 stores various pieces of information, programs, and so on to be used in the control and processing unit 120 and various pieces of information and so on obtained by processing of the control and processing unit 120.

The input unit 150 inputs input information operation input by a user, for example, to the control and processing unit 120.

The display unit 160 displays a determination result of the defect 211 by the defect determination unit 124 based on the control of the display control unit 125. Further, the display unit 160 displays various pieces of information based on the control of the display control unit 125.

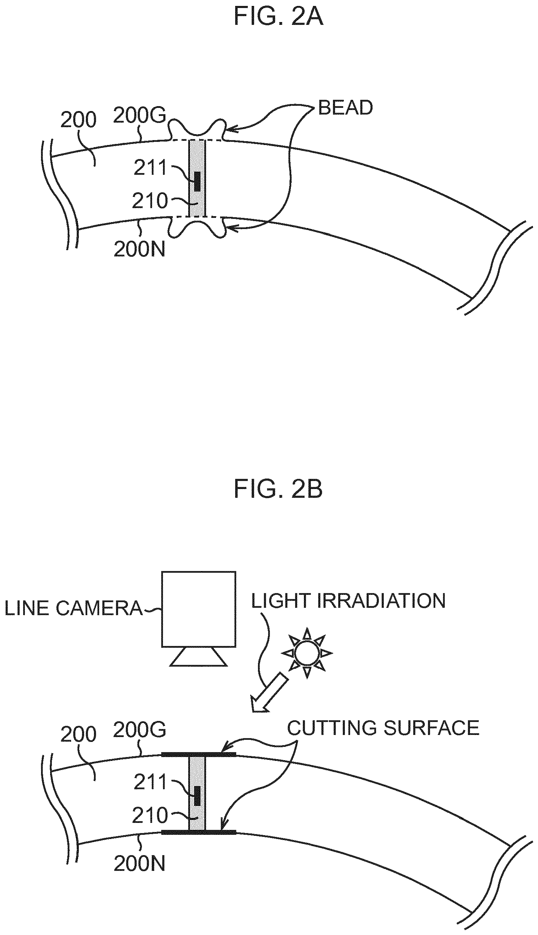

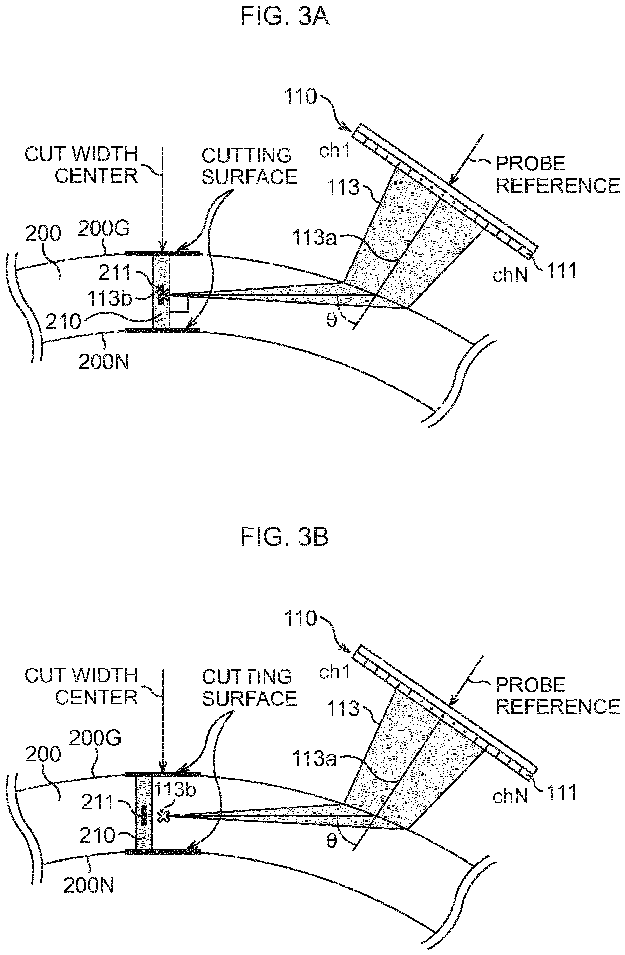

Next, there will be explained positional displacement of the welded part 210 in the circumferential direction of the welded steel pipe 200 using Fig. 2A to Fig. 2C and Fig. 3A and Fig. 3B.

Fig. 2A to Fig. 2C each are a view illustrating the embodiment of the present invention and illustrating one example of a method of determining the position of the welded part 210 illustrated in Fig. 1. Fig. 2A is a schematic view illustrating one example of the case where for example, a band-shaped steel sheet (band steel) is welded at the welded part 210 to manufacture the welded steel pipe 200. As illustrated in Fig. 2A, at the time of welding, protuberant portions called beads are formed on the welded part 210.

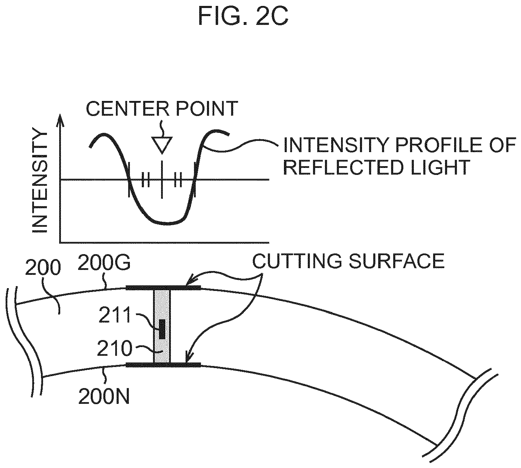

Fig. 2B is a view illustrating a state where the beads illustrated in Fig. 2A are cut, light irradiation is performed on a cutting surface, and then a line camera photographs the cutting surface as one example for determining the position of the welded part 210. Further, Fig. 2C is a view illustrating one example of a intensity profile of an image of the cutting surface photographed by the line camera illustrated in Fig. 2B. On this occasion, at the center point of the cutting surface, the intensity decreases due to the reason that the emitted light more irregularly reflects or the like, so that in the example illustrated in Fig. 2C, the position where the intensity most decreases is determined as the position of the welded part 210. That is, Fig. 2C illustrates an example where the center point of a cut width of the cutting surface is determined as the position of the welded part 210. The reason why the position of the welded part 210 is determined by the method illustrated in Fig. 2A to Fig. 2C is because it is difficult to directly measure the position of the welded part 210 after cutting the beads and determine the position in many cases.

Fig. 3A and Fig. 3B each are a view illustrating a state of the case where the ultrasonic beams 113 are transmitted to the position of the welded part 210 determined by the method illustrated in Fig. 2C from the phased array probe 110 illustrated in Fig. 1. Fig. 3A illustrates the case where the welded part 210 is actually located at the position (cut width center) of the welded part 210 determined by the method illustrated in Fig. 2C. In the case illustrated in Fig. 3A, the welded part 210 is actually located at the position of the welded part 210 determined by the method illustrated in Fig. 2C, so that it is possible to set a focusing position 113b of the ultrasonic beams 113 at the actual position of the welded part 210 by performing a control so that the ultrasonic beams 113 focus on the position of the welded part 210 determined by the method illustrated in Fig. 2C. In contrast to this, Fig. 3B illustrates the case where the actual position of the welded part 210 is displaced in the circumferential direction of the welded steel pipe 200 from the position of the welded part 210 (cut width center) determined by the method illustrated in Fig. 2C. In the case illustrated in Fig. 3B, the actual position of the welded part 210 is displaced in the circumferential direction of the welded steel pipe 200 from the position of the welded part 210 determined by the method illustrated in Fig. 2C, so that it is impossible to set the focusing position 113b of the ultrasonic beams 113 at the actual position of the welded part 210 when performing a control so that the ultrasonic beams 113 focus on the position of the welded part 210 determined by the method illustrated in Fig. 2C. Therefore, in the case illustrated in Fig. 3B, a decrease in accuracy of detecting the defect 211 is concerned. Then, in order to suppress the decrease in accuracy of detecting the defect 211 in the case illustrated in Fig. 3B, this embodiment is designed to set m pieces, being larger than n pieces, of the ultrasonic elements including n pieces of the ultrasonic elements relating to the transmission ultrasonic elements 112 as the reception ultrasonic elements 114 by the reception ultrasonic element setting unit 122.

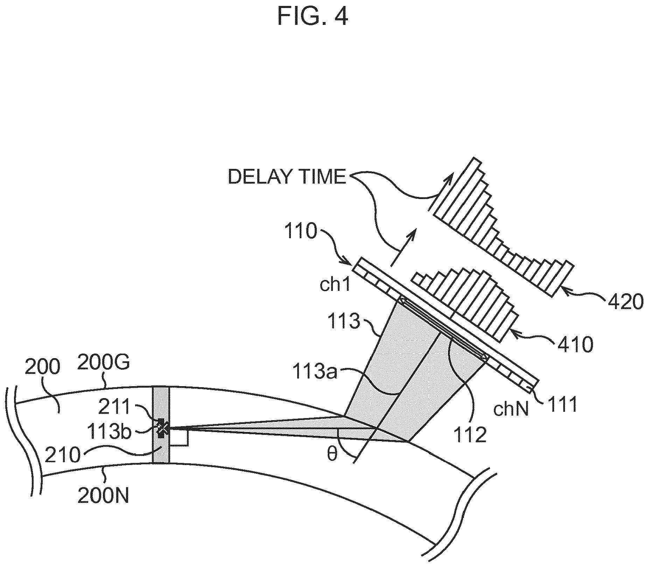

Next, there will be explained setting of a transmission delay pattern of the transmission ultrasonic elements 112 relating to the transmission of the ultrasonic beams 113 by the transmission/reception control unit 123 and setting of a reception delay pattern of the reception ultrasonic elements 114 relating to the reception of the reflected ultrasonic beams by the transmission/reception control unit 123 using Fig. 4.

Fig. 4 is a view illustrating the embodiment of the present invention and illustrating a setting example of a transmission delay pattern 410 of the transmission ultrasonic elements 112 relating to the transmission of the ultrasonic beams 113 by the transmission/reception control unit 123 in Fig. 1 and a setting example of a reception delay pattern 420 of the reception ultrasonic elements 114 relating to the reception of the reflected ultrasonic beams by the transmission/reception control unit 123 in Fig. 1. Incidentally, the transmission delay pattern 410 and the reception delay pattern 420 that are illustrated in Fig. 4 are merely one example, and are not limited to the mode illustrated in Fig. 4 in this embodiment.

Concretely, the transmission/reception control unit 123 sets the transmission delay pattern 410 and the reception delay pattern 420 while considering the following factors, for example.
- The number (n) of transmission ultrasonic elements 112
- The number (m) of reception ultrasonic elements 114
- The outside diameter of the welded steel pipe 200
- The thickness (length between the outer surface 200G and the inner surface 200N) of the welded steel pipe 200
- The geometric positional relationship between the phased array probe 110 and the welded steel pipe 200
- The angle *θ* and the focusing position 113b of the ultrasonic beams 113
- The specifications (frequency, pitch, element number, element size, and so on) of the phased array probe 110
- Physical property values of a medium (water) present between the phased array probe 110 and the outer surface 200G of the welded steel pipe 200 (a sound propagation speed of the ultrasonic beam 113, and so on)
- Physical property values of a steel product of the welded steel pipe 200 (a sound propagation speed of the ultrasonic beam 113, and so on)

Concretely, in this embodiment, the transmission/reception control unit 123 sets the transmission delay pattern 410 so as to refract the ultrasonic beam 113 at the angle *θ* (about 70° in the example illustrated in Fig. 4) relative to the incident axis 113a on the outer surface 200G of the welded steel pipe 200 and make it directly incident on the welded part 210 substantially vertically without reflecting on the inner surface 200N of the welded steel pipe 200.

On this occasion, the position of the phased array probe 110 is set in the following manner, for example.

First, based on the determined focusing position 113b of the ultrasonic beams 113, a line orthogonal to the welded part 210 is extended toward the outer surface 200G of the welded steel pipe 200. Then, the line is extended in the direction of the phased array probe 110 at the angle of refraction *θ* based on Snell's law at the outer surface 200G of the welded steel pipe 200. Then, the phased array probe 110 is arranged so that the center of the phased array probe 110 can be located on the extension of the line and the extended line and an arrangement surface of the ultrasonic elements 111 can intersect at right angles.

Further, the distance (water distance) between the phased array probe 110 and the outer surface 200G of the welded steel pipe 200 is determined in consideration of an inspection time to be affected by a propagation time of the reflected ultrasonic beams from the defect 211 present in the welded part 210 (in which the propagation time, namely, the inspection time becomes long when the water distance is long), the fact that the effect of reverberation echoes going and returning between the phased array probe 110 and the outer surface 200G of the welded steel pipe 200 is ignorable, or the like.

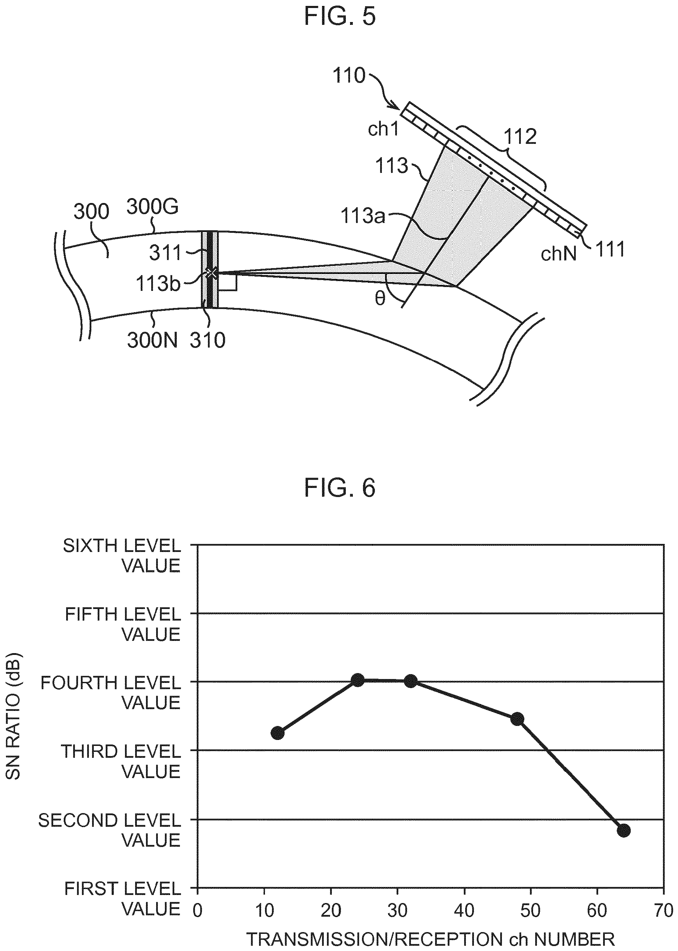

Next, there will be explained the SN ratio information 141 stored in the storage unit 140 using Fig. 5 to Fig. 10.

Fig. 5 is a view illustrating the embodiment of the present invention and illustrating a state of transmitting the ultrasonic beams 113 to a calibration pipe 300 for calibrating the welded steel pipe 200 in Fig. 1 from the phased array probe 110 in Fig. 1. The calibration pipe 300 illustrated in Fig. 5 is a steel pipe for calibrating the welded steel pipe 200 illustrated in Fig. 1 and is a steel pipe with an artificial defect 311 formed in a second welded part 310 equivalent to the welded part 210 of the welded steel pipe 200. On this occasion, as the artificial defect 311, a through hole having a predetermined size is formed.

Fig. 6 is a view illustrating a reference example and illustrating an SN ratio relating to reflected ultrasonic beams from the artificial defect 311 in the case where a number n of the transmission ultrasonic elements 112 illustrated in Fig. 5 is changed sequentially and the reception ultrasonic elements 114 are the same as the transmission ultrasonic elements 112. As for the SN ratio of the vertical axis in Fig. 6, a first level value to a sixth level value are illustrated, which indicates that as the value of k of a kth level value increases, the SN ratio increases.

Generally, the relationship of sound pressure sensitivity between the focusing-type phased array probe 110 and the focusing position 113b is thought that as the number of the ultrasonic elements 111 to be driven (a transmission/reception ch number) is larger, the sound pressure sensitivity increases as long as the distance between the phased array probe 110 and the focusing position 113b is fixed. That is, it is expected that as the number of the ultrasonic elements 111 to be driven (the transmission/reception ch number) is larger, the SN ratio increases. However, in Fig. 6, as the number of the ultrasonic elements 111 to be driven (the transmission/reception ch number) increases, the SN ratio increases to be maximum in a certain range, but as the number of the ultrasonic elements 111 to be driven (the transmission/reception ch number) increases thereafter, the SN ratio decreases. This is thought because with the increase in the number of the ultrasonic elements 111 to be driven (the transmission/reception ch number), the ultrasonic elements 111 to be driven are increased in the direction going away from the center of the phased array probe 110, and thereby the ultrasonic elements 111 increasing in excess of a certain range do not contribute to an improvement in the SN ratio but cause an increase in noise. Further, the angle at which the ultrasonic beam to be transmitted enters an outer surface 300G in Fig. 5 varies according to the position of the ultrasonic element 111 to be driven, and thereby reciprocating sound pressure penetration changes, which is also one cause (the penetration decreases in the ultrasonic element 111 on an outer side where the incident angle increases (concretely in the direction toward ch N), for example).

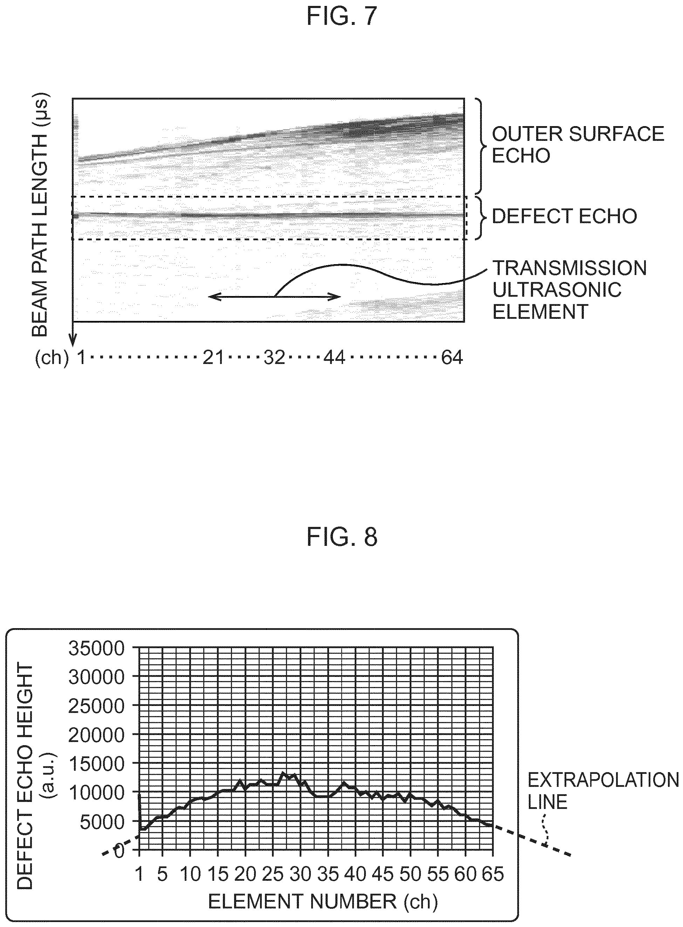

Fig. 7 is a view illustrating the embodiment of the present invention and illustrating a B scanned image relating to the reflected ultrasonic beams received by the ultrasonic elements 111 of the phased array probe 110 in which the number n of the transmission ultrasonic elements 112 illustrated in Fig. 5 is set to a predetermined number. Concretely, in Fig. 7, as the phased array probe 110, one composed of 64 pieces of the ultrasonic elements 111 in total is used. Further, in Fig. 7, as the transmission ultrasonic elements 112, 24 pieces of the ultrasonic elements 111 (with element numbers of 21 ch to 44 ch concretely) are set. Further, in Fig. 7, the ultrasonic beams 113 are transmitted from the transmission ultrasonic elements 112 at the transmission delay pattern 410 set so that the ultrasonic beams 113 focus on the center portion of the calibration pipe 300 in the thickness direction at the angle of refraction *θ* = 70° . Then, Fig. 7 illustrates the B scanned image based on a waveform of the reflected ultrasonic beams received by the ultrasonic elements 111 (with element numbers of 1 ch to 64 ch) of the phased array probe 110 under the above-described conditions.

In Fig. 7, a colored portion in a region described as an outer surface echo indicates that the ultrasonic elements 111 of the phased array probe 110 each have received the reflected ultrasonic beam from the outer surface 300G of the calibration pipe 300. Further, in Fig. 7, a colored portion in a region described as a defect echo indicates that the ultrasonic elements 111 of the phased array probe 110 each have received the reflected ultrasonic beam from the artificial defect 311 with *φ* 0.5 mm.

Fig. 8 is a view illustrating the embodiment of the present invention and in which the maximum signal intensity of defect echos received by the ultrasonic elements 111 (with the element numbers of 1 ch to 64 ch) of the phased array probe 110 is illustrated as a defect echo height in the case of Fig. 7. Concretely, in Fig. 8, the horizontal axis indicates the ultrasonic elements 111 (with the element numbers of 1 ch to 64 ch) of the phased array probe 110 and the vertical axis indicates the defect echo height.

Fig. 8 reveals that a defect echo with a large signal intensity is observed at the ultrasonic transducers 111 (the element numbers of 21 ch to 44 ch) set as the transmission ultrasonic elements 112, while at the other ultrasonic elements 111 (ch 1 to ch 20 and ch 45 to ch 64) as well, a defect echo with a certain or more signal intensity is observed. From the above, it is inferred that in addition to the ultrasonic elements 111 set as the transmission ultrasonic elements 112, the ultrasonic elements 111 other than the transmission ultrasonic elements 112 are contained as the reception ultrasonic elements 114, thereby being able to contribute to an improvement in the SN ratio relating to the reflected ultrasonic beams from the artificial defect 311 (the defect echoes).

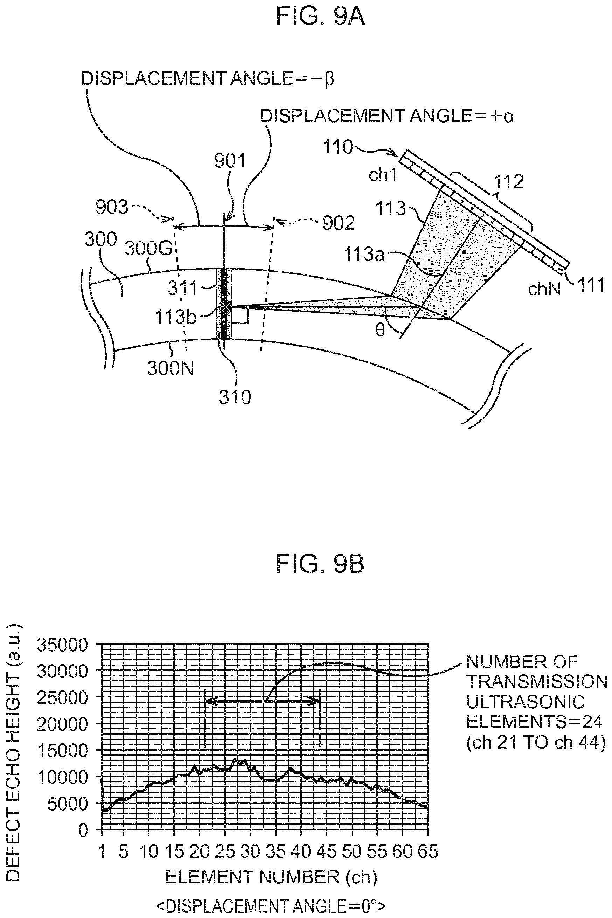

Fig. 9A to Fig. 9D are views illustrating the embodiment of the present invention and illustrating one example of acquisition processing of the SN ratio information 141 stored in the storage unit 140 in Fig. 1.

Fig. 9A is a view illustrating a state of transmitting the ultrasonic beams 113 to the calibration pipe 300 for calibrating the welded steel pipe 200 in Fig. 1 from the phased array probe 110 in Fig. 1. In Fig. 9A, the same reference numerals and symbols are added to the same components as those illustrated in Fig. 5. Further, Fig. 9A also illustrates the case where the position of the second welded part 310 is displaced in the circumferential direction of the calibration pipe 300, in which relative to the phased array probe 110, a reference position of the second welded part 310 is set as a first position 901, a position where the position of the second welded part 310 is displaced clockwise from the first position 901 in the circumferential direction of the calibration pipe 300 by an angle *α* (an angle +o; when the clockwise rotation is set as the + direction) is set as a second position 902, and a position where the position of the second welded part 310 is displaced counterclockwise from the first position 901 in the circumferential direction of the calibration pipe 300 by an angle *β* (an angle - *β* when the clockwise rotation is set as the + direction) is set as a third position 903. Further, the focusing position 113b of the ultrasonic beams 113 is set to be located at the second welded part 310 when the second welded part 310 is located at the first position 901.

Fig. 9B is a view in which the maximum signal intensity of defect echos received by the ultrasonic elements 111 (with the element numbers of 1 ch to 64 ch) of the phased array probe 110 is indicated as a defect echo height when the second welded part 310 exists at the first position 901 illustrated in Fig. 9A (namely, when a displacement angle from the reference position of the second welded part 310 relative to the phased array probe 110 is 0° ). In Fig. 9B, similarly to the case of Fig. 8, as the transmission ultrasonic elements 112, 24 pieces of the ultrasonic elements 111 with the element numbers of 21 ch to 44 ch are used.

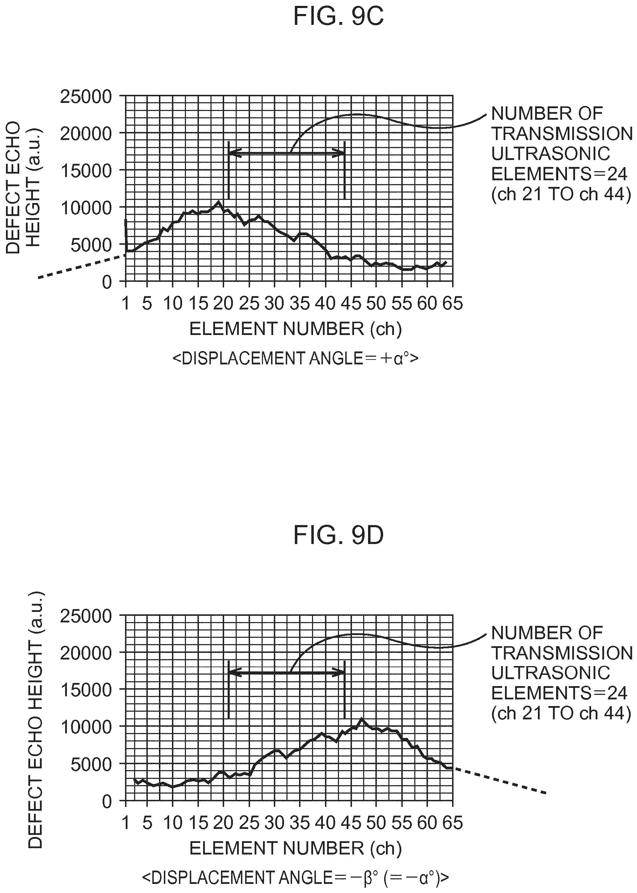

Fig. 9C is a view in which the maximum signal intensity of defect echos received by the ultrasonic elements 111 (with the element numbers of 1 ch to 64 ch) of the phased array probe 110 is indicated as a defect echo height when the second welded part 310 exists at the second position 902 illustrated in Fig. 9A (namely, when the displacement angle from the reference position of the second welded part 310 relative to the phased array probe 110 is + *α*). In Fig. 9C, similarly to the case of Fig. 8, as the transmission ultrasonic elements 112, 24 pieces of the ultrasonic elements 111 with the element numbers of 21 ch to 44 ch are used. Further, in Fig. 9C, the displacement angle + *α* is set to +4° . This displacement angle + *α* = +4° results from consideration of an error based on the positional relationship between the welded part 210 in a manufacturing process of the welded steel pipe 200 and the phased array probe 110, for example.

Fig. 9D is a view in which the maximum signal intensity of defect echos received by the ultrasonic elements 111 (with the element numbers of 1 ch to 64 ch) of the phased array probe 110 is indicated as a defect echo height when the second welded part 310 exists at the third position 903 illustrated in Fig. 9A (namely, when the displacement angle from the reference position of the second welded part 310 relative to the phased array probe 110 is - *β* ). In Fig. 9D, similarly to the case of Fig. 8, as the transmission ultrasonic elements 112, 24 pieces of the ultrasonic elements 111 with the element numbers of 21 ch to 44 ch are used. Further, in Fig. 9D, the displacement angle - *β* is set to -4° (= - *α*). This displacement angle - *β* = -4° results from consideration of an error based on the positional relationship between the welded part 210 in a manufacturing process of the welded steel pipe 200 and the phased array probe 110, for example.

When the second welded part 310 exists at the first position 901 (namely, when the displacement angle from the reference position of the second welded part 310 relative to the phased array probe 110 is 0° ), the peak of the defectecho height exists at the ultrasonic elements 111 near the center of the phased array probe 110, which is illustrated in Fig. 9B.

Further, when the second welded part 310 exists at the second position 902 (namely, when the displacement angle from the reference position of the second welded part 310 relative to the phased array probe 110 is + *α*), the peak of the defect echo height exists at the ultrasonic elements 111 with the element numbers smaller than those near the center of the phased array probe 110, which is illustrated in Fig. 9C.

Further, when the second welded part 310 exists at the third position 903 (namely, when the displacement angle from the reference position of the second welded part 310 relative to the phased array probe 110 is - *β* (= - *α*)), the peak of the defect echo height exists at the ultrasonic elements 111 with the element numbers larger than those near the center of the phased array probe 110, which is illustrated in Fig. 9D.

From the above, it is found out that when the ultrasonic elements 111 that are the same as the transmission ultrasonic elements 112 are used as the reception ultrasonic elements 114 as in the prior art, the SN ratio relating to the reflected ultrasonic beams from the defect (defect echos) decreases as the peak of the defect echo height moves as illustrated in Fig. 9B to Fig. 9D. Thus, in this embodiment, considering the movement of the peak of the defect echo height illustrated in Fig. 9B to Fig. 9D, it is designed that the reception ultrasonic element setting unit 122 sets m pieces, being larger than n pieces, of the ultrasonic elements including n pieces of the ultrasonic elements relating to the transmission ultrasonic elements 112 as the reception ultrasonic elements 114 to suppress the decrease in the SN ratio relating to the reflected ultrasonic beams from the defect (defect echos). The SN ratio information 141 to be used when the reception ultrasonic element setting unit 122 sets the reception ultrasonic elements 114 will be explained using Fig. 10.

Fig. 10 is a view illustrating the embodiment of the present invention and illustrating one example of the SN ratio information 141 stored in the storage unit 140 in Fig. 1. As for the SN ratio of the vertical axis in Fig. 10, a first level value to a sixth level value are illustrated, which indicates that as the value of k of a kth level value increases, the SN ratio increases. Fig. 10 illustrates, as the SN ratio information 141, information relating to SN ratios acquired while changing the value of m in m pieces of the ultrasonic elements 111 relating to the reception ultrasonic elements 114 relative to n pieces of the ultrasonic elements 111 relating to transmission ultrasonic elements 112. Concretely, in Fig. 10, similarly to the cases illustrated in Fig. 9A to Fig. 9D, as the phased array probe 110, one including 64 pieces of the ultrasonic elements 111 (with the element numbers of 1 ch to 64 ch) is used and further, as the transmission ultrasonic elements 112, 24 pieces (namely, n = 24) of the ultrasonic elements 111 with the element numbers of 21 ch to 44 ch are used.

Further, Fig. 10 illustrates pieces of information relating to SN ratios in the cases where as m pieces of the ultrasonic elements 111 relating to the reception ultrasonic elements 114, 12 pieces of the ultrasonic elements 111 with the element numbers of 27 ch to 38 ch are used, 24 pieces of the ultrasonic elements 111 with the element numbers of 21 ch to 44 ch are used (namely, the ultrasonic elements 111 that are the same as the transmission ultrasonic elements 112 are used), 32 pieces of the ultrasonic elements 111 with the element numbers of 17 ch to 48 ch are used, 48 pieces of the ultrasonic elements 111 with the element numbers of 9 ch to 56 ch are used, and 64 pieces of the ultrasonic elements 111 with the element numbers of 1 ch to 64 ch are used.

Further, Fig. 10 illustrates, as pieces of the information relating to the SN ratios acquired while changing the value of m in m pieces of the ultrasonic elements 111 relating to the reception ultrasonic elements 114 to 12, 24, 32, 48, and 64, which are described above, a first SN ratio 1001 being the SN ratio relating to the reflected ultrasonic beams from the artificial defect 311 in the case where the second welded part 310 illustrated in Fig. 9A is arranged at the first position 901 in the circumferential direction of the calibration pipe 300 (the displacement angle = 0° ), a second SN ratio 1002 being the SN ratio relating to the reflected ultrasonic beams from the artificial defect 311 in the case where the second welded part 310 illustrated in Fig. 9A is arranged at the second position 902 in a manner to be displaced clockwise in the circumferential direction of the calibration pipe 300 from the first position 901 by the angle *α* (the displacement angle = + *α* = +4° ), and a third SN ratio 1003 being the SN ratio relating to the reflected ultrasonic beams from the artificial defect 311 in the case where the second welded part 310 illustrated in Fig. 9A is arranged at the third position 903 in a manner to be displaced counterclockwise in the circumferential direction of the calibration pipe 300 from the first position 901 by the angle *β* (the displacement angle = -*β* = -4° (= -*α*°)). Further, Fig. 10 also illustrates a difference between the first SN ratio 1001 and the second SN ratio 1002 and a difference between the first SN ratio 1001 and the third SN ratio 1003 in each of the cases where the value of m in m pieces of the ultrasonic elements 111 relating to the reception ultrasonic elements 114 is changed to 12, 24, 32, 48, and 64, which are described above.

According to Fig. 10, it is found out that the difference between the first SN ratio 1001 and the second SN ratio 1002 or the difference between the first SN ratio 1001 and the third SN ratio 1003 decreases in the case where m pieces, being larger than n pieces, of the ultrasonic elements including n pieces of the ultrasonic elements relating to the transmission ultrasonic elements 112 are used as the reception ultrasonic elements 114 (the case where n = 24 is applied as the transmission ultrasonic elements 112 and m = 32 is applied as the reception ultrasonic elements 114, the case where n = 24 is applied as the transmission ultrasonic elements 112 and m = 48 is applied as the reception ultrasonic elements 114, and the case where n = 24 is applied as the transmission ultrasonic elements 112 and m = 64 is applied as the reception ultrasonic elements 114) rather than the case where the ultrasonic elements 111 that are the same as the transmission ultrasonic elements 112 are used as the reception ultrasonic elements 114 (the case where n = 24 is applied as the transmission ultrasonic elements 112 and m = 24 is applied as the reception ultrasonic elements 114). This reveals that it is possible to suppress the decrease in the SN ratio relating to the reflected ultrasonic beams from the artificial defect 311 (in other words, the defect 211) (the defect echos) even when the position of the second welded part 310 (in other words, the welded part 210) is displaced in the circumferential direction of the calibration pipe 300 (in other words, the welded steel pipe 200) providing that the reception ultrasonic element setting unit 122 sets m pieces, being larger than n pieces, of the ultrasonic elements including n pieces of the ultrasonic elements relating to the transmission ultrasonic elements 112 as the reception ultrasonic elements 114.

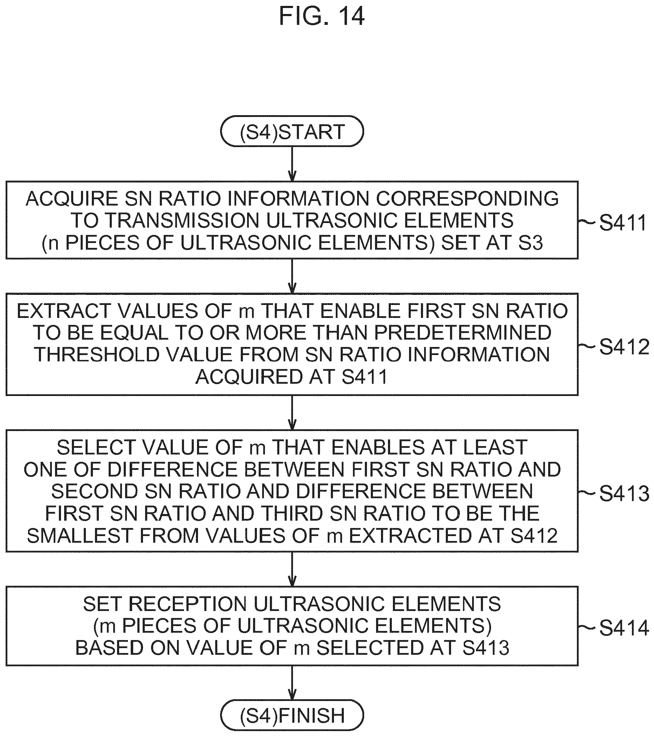

Incidentally, Fig. 10 illustrates pieces of the SN ratio information in the case of n = 24 as n pieces of the ultrasonic elements 111 relating to the transmission ultrasonic elements 112, but in this embodiment, the SN ratio information stored in the storage unit 140 in Fig. 1 as the SN ratio information 141 is not limited to the case of n = 24, and in addition to pieces of the SN ratio information in the case of n = 24, pieces of SN ratio information in the case of n being different values (such as 12 and 32 as the value of n, for example) are stored. Then, the reception ultrasonic element setting unit 122 uses the SN ratio information 141 stored in the storage unit 140 to set the reception ultrasonic elements 114 consisting of m pieces of the ultrasonic elements 111. Concrete setting examples of the reception ultrasonic elements 114 by the reception ultrasonic element setting unit 122 will be described later using Fig. 14 to Fig. 17.

Further, in the examples illustrated in Fig. 9A to Fig. 9D and Fig. 10, the example where the displacement angle *β* is made the same as the displacement angle *α* has been explained, but the present invention is not limited to this mode, and a mode in which the displacement angle *β* is made different from the displacement angle *α* is also included in the present invention.

Next, there will be explained processing procedures of a defect detection method by the defect detection device 100 according to this embodiment.

Fig. 11 is a flowchart illustrating one example of the processing procedures of the defect detection method by the defect detection device 100 according to this embodiment of the present invention.

First, at Step S1 in Fig. 11, the transmission/reception control unit 123 sets a focusing region number R indicating the number of focusing regions where the ultrasonic beams 113 are focused in the thickness direction of the welded steel pipe 200 based on input information input from the input unit 150, for example.

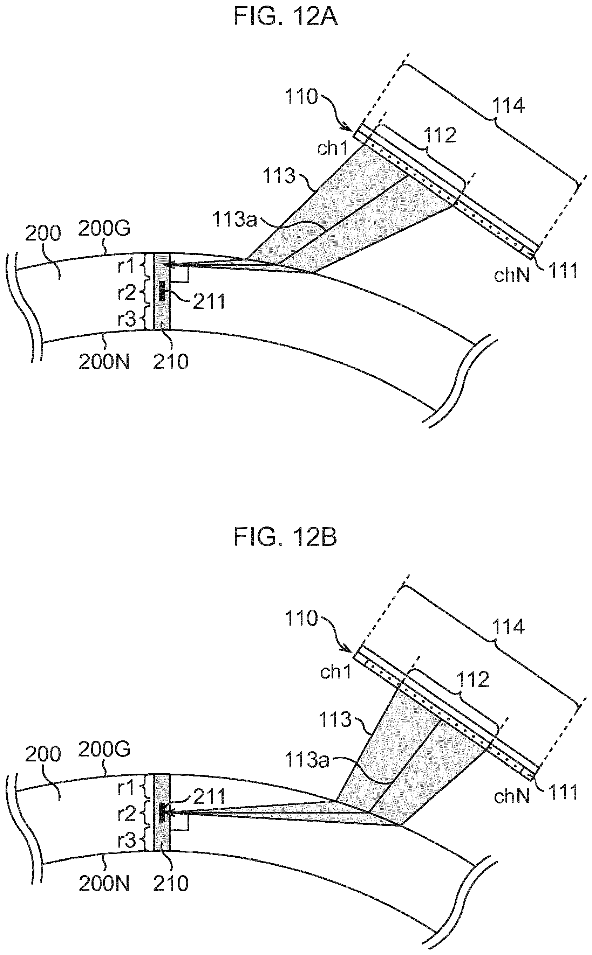

Fig. 12A to Fig. 12C each are a view illustrating a first example of the case where the defect detection device 100 according to the embodiment of the present invention performs defect detection processing by focusing the ultrasonic beams 113 on a predetermined focusing region in the thickness direction of the welded steel pipe 200.

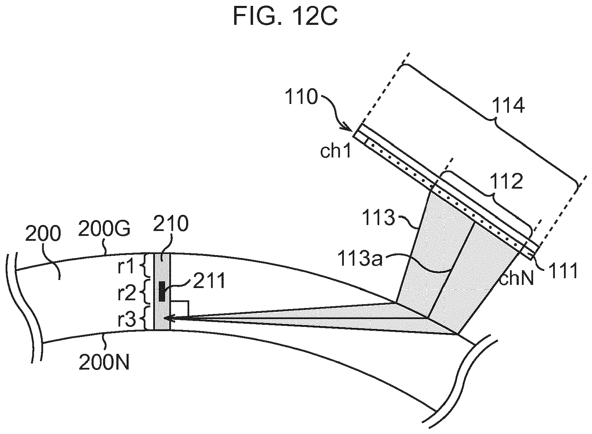

Fig. 12A to Fig. 12C illustrate the case where the welded steel pipe 200 in the thickness direction is divided into three focusing regions r1 to r3 to scan the ultrasonic beams 113, and in this case, at Step S1 in Fig. 11 described above, the focusing region number R is set to three. Concretely, Fig. 12A illustrates the case where the transmission ultrasonic elements 112 consisting of n pieces of the ultrasonic elements 111 on the side with small element numbers (ch 1 side) of the phased array probe 110 transmit the ultrasonic beams 113 in order to perform the defect detection processing of the focusing region r1 located near the outer surface 200G of the welded steel pipe 200 out of the three focusing regions r1 to r3. Further, Fig. 12B illustrates the case where the transmission ultrasonic elements 112 consisting of n pieces of the ultrasonic elements 111 near the center of the phased array probe 110 transmit the ultrasonic beams 113 in order to perform the defect detection processing of the focusing region r2 located at the center portion of the welded steel pipe 200 in the thickness direction out of the three focusing regions r1 to r3. Further, Fig. 12C illustrates the case where the transmission ultrasonic elements 112 consisting of n pieces of the ultrasonic elements 111 on the side with large element numbers (ch N side) of the phased array probe 110 transmit the ultrasonic beams 113 in order to perform the defect detection processing of the focusing region r3 located near the inner surface 200N of the welded steel pipe 200 out of the three focusing regions r1 to r3. That is, the first example illustrated in Fig. 12A to Fig. 12C illustrates the case of scanning the ultrasonic beams 113 in each of the focusing regions r1 to r3 in the thickness direction of the welded steel pipe 200 by sequentially changing the position of the transmission ultrasonic element 112 in the phased array probe 110.

In the case of the first example illustrated in Fig. 12A to Fig. 12C, a mode in which the SN ratio information 141 illustrated in Fig. 10 is stored in the storage unit 140 in Fig. 1 according to each of the focusing regions r1 to r3 is employed.

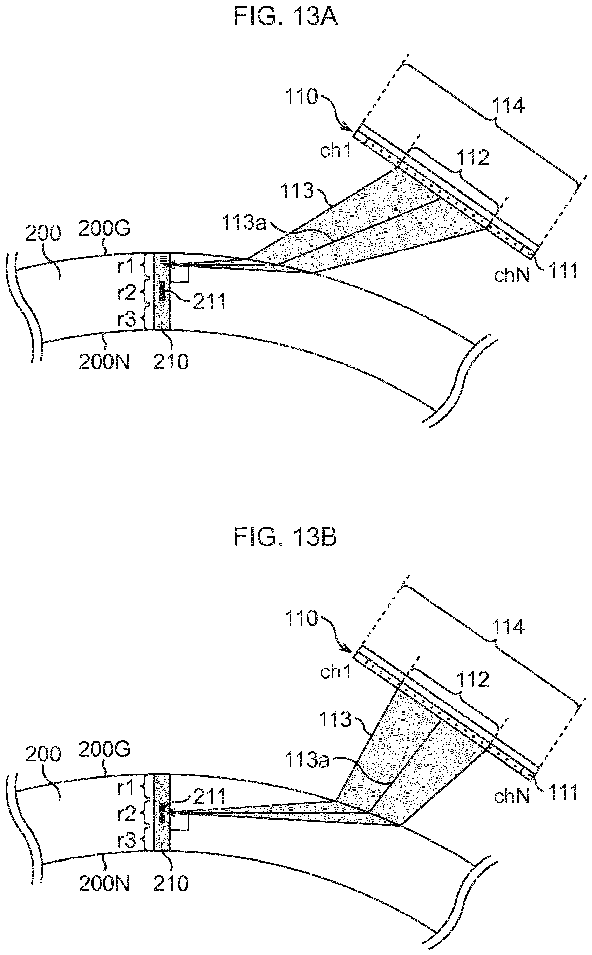

Fig. 13A to Fig. 13C each are a view illustrating a second example in the case where the defect detection device 100 according to the embodiment of the present invention performs the defect detection processing by focusing the ultrasonic beams 113 on a predetermined focusing region in the thickness direction of the welded steel pipe 200.

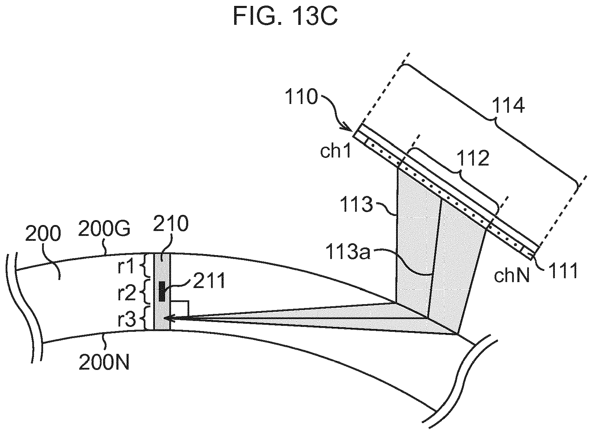

Fig. 13A to Fig. 13C also illustrate the case where the welded steel pipe 200 in the thickness direction is divided into the three focusing regions r1 to r3 similarly to the above-described case of Fig. 12A to Fig. 12C to scan the ultrasonic beams 113, and in this case, at Step S1 in Fig. 11 described above, the focusing region number R is set to three. Concretely, Fig. 13A illustrates the case where the transmission ultrasonic elements 112 consisting of n pieces of the ultrasonic elements 111 near the center of the phased array probe 110 transmit the ultrasonic beams 113 while adjusting the transmission delay pattern 410 in order to perform the defect detection processing of the focusing region r1 located near the outer surface 200G of the welded steel pipe 200 out of the three focusing regions r1 to r3. Further, Fig. 13B illustrates the case where the transmission ultrasonic elements 112 consisting of n pieces of the ultrasonic elements 111 near the center of the phased array probe 110 transmit the ultrasonic beams 113 while adjusting the transmission delay pattern 410 in order to perform the defect detection processing of the focusing region r2 located at the center portion of the welded steel pipe 200 in the thickness direction out of the three focusing regions r1 to r3. Further, Fig. 13C illustrates the case where the transmission ultrasonic elements 112 consisting of n pieces of the ultrasonic elements 111 near the center of the phased array probe 110 transmit the ultrasonic beams 113 while adjusting the transmission delay pattern 410 in order to perform the defect detection processing of the focusing region r3 located near the inner surface 200N of the welded steel pipe 200 out of the three focusing regions r1 to r3. That is, the second example illustrated in Fig. 13A to Fig. 13C illustrates the case of scanning the ultrasonic beams 113 in each of the focusing regions r1 to r3 in the thickness direction of the welded steel pipe 200 by fixing the position of the transmission ultrasonic elements 112 in the phased array probe 110 to the center portion and sequentially changing the transmission delay pattern 410.

In the case of the second example illustrated in Fig. 13A to Fig. 13C, a mode in which the SN ratio information 141 illustrated in Fig. 10 is stored in the storage unit 140 in Fig. 1 according to each of the focusing regions r1 to r3 is employed.

The explanation of Fig. 11 is started again here.

After the processing at Step S1 is finished, at Step S2, the transmission/reception control unit 123 sets one as a variable r representing the focusing region as a transmission object in the thickness direction of the welded steel pipe 200. Thereby, one is set as the focusing region r of a transmission object. For example, in the case of the first example illustrated in Fig. 12A to Fig. 12C, the focusing region r1 illustrated in Fig. 12A is set, and in the case of the second example illustrated in Fig. 13A to Fig. 13C, the focusing region r1 illustrated in Fig. 13A is set.

Then, at Step S3, the transmission ultrasonic element setting unit 121 sets the transmission ultrasonic elements 112 in the focusing region r based on input information input from the input unit 150, for example. Concretely, the transmission ultrasonic element setting unit 121 sets n pieces of the ultrasonic elements, being some of a plurality (N pieces in the example illustrated in Fig. 1) of the ultrasonic elements 111 composing the phased array probe 110, as the transmission ultrasonic elements 112. Here, in order to agree with the explanation of Fig. 10, out of 64 pieces of the ultrasonic elements 111 with the element numbers of ch 1 to ch 64 composing the phased array probe 110, 24 pieces of the ultrasonic elements 111 with the element numbers of 21 ch to 44 ch are set as the transmission ultrasonic elements 112.

Then, at Step S4, the reception ultrasonic element setting unit 122 uses the SN ratio information 141 of the focusing region r stored in the storage unit 140 to set the reception ultrasonic elements 114 in the focusing region r. Concretely, the reception ultrasonic element setting unit 122 sets m pieces, being larger than n pieces, of the ultrasonic elements 111 including n pieces of the ultrasonic elements 111 relating to the transmission ultrasonic elements 112 as the reception ultrasonic elements 114. Concrete setting examples of the reception ultrasonic elements 114 by the reception ultrasonic element setting unit 122 will be explained later using Fig. 14 to Fig. 17.

Then, at Step S5, the transmission unit 131 performs processing of transmitting the ultrasonic beams 113 toward the focusing region r of the welded part 210 through the outer surface 200G of the welded steel pipe 200 from the transmission ultrasonic elements 112 set at Step S3 based on control of the transmission/reception control unit 123. Concretely, the transmission unit 131 makes the ultrasonic beams 113 directly incident on the welded part 210 substantially vertically without reflecting on the inner surface 200N of the welded steel pipe 200 as illustrated in Fig. 12A to Fig. 12C or Fig. 13A to Fig. 13C, for example.

Then, at Step S6, the reception unit 132 performs processing of receiving the reflected ultrasonic beams being the ultrasonic beams 113 reflected by the welded steel pipe 200 including the welded part 210 via the reception ultrasonic elements 114 set at Step S4 based on control of the transmission/reception control unit 123.

Then, at Step S7, the defect determination unit 124 determines whether or not the defect 211 is present in the focusing region r of the welded part 210 based on the reflected ultrasonic beams received at Step S6. The determination of the defect 211 based on the reflected ultrasonic beams performed by the defect determination unit 124 is a well-known art as described also in Patent Literature 1, for example, so that its detailed explanation is omitted. As one example, it is thought to determine whether or not the defect 211 is present in the focusing region r of the welded part 210 according to whether or not a signal based on the reflected ultrasonic beams has been received in a time zone region of the defect echos illustrated in Fig. 7, for example. Incidentally, in the example illustrated in Fig. 12A to Fig. 12C or Fig. 13A to Fig. 13C, for example, it is determined that the defect 211 is present at the time of the defect detection processing of the focusing region r2, and it is determined that the defect 211 is not present at the time of the defect detection processing of the focusing regions r1 and r3.

Then, at Step S8, the display control unit 125 performs a control to display a determination result regarding whether or not the defect 211 is present, which is obtained at Step S7, on the display unit 160.

Then, at Step S9, the transmission/reception control unit 123 determines whether or not the variable r representing the focusing region as a transmission object is less than the focusing region number R set at Step S1.

As a result of the determination at Step S9, when the variable r representing the focusing region as a transmission object is less than the focusing region number R set at Step S1 (S9/YES), it is determined that the defect detection processings of all the focusing regions are not yet performed, and then proceed to Step S10.

When proceeding to Step S10, the transmission/reception control unit 123 adds one to the variable r representing the focusing region as a transmission object in the thickness direction of the welded steel pipe 200. Thereby, the focusing region r as a new transmission object is set. Thereafter, returning to Step S3, the processings at and after Step S3 are performed on the focusing region r newly set at Step S10.

On the other hand, as a result of the determination at Step S9, when the variable r representing the focusing region as a transmission object is not less than the focusing region number R set at Step S1 (S9/NO), it is determined that the defect detection processings of all the focusing regions are performed, and then the processings of the flowchart in Fig. 11 are finished.

Next, there will be explained detailed processing procedures of the setting processing of the reception ultrasonic elements 114 at Step S4 in Fig. 11 using Fig. 14 to Fig. 17.

Fig. 14 is a flowchart illustrating one example of detailed processing procedures of first setting processing of the reception ultrasonic elements 114 at Step S4 in Fig. 11.

In the first setting processing illustrated in Fig. 14, first, at Step S411, the reception ultrasonic element setting unit 122 acquires the SN ratio information corresponding to n pieces of the ultrasonic elements relating to the transmission ultrasonic elements 112 set at Step S3 in Fig. 11 from the SN ratio information 141 stored in the storage unit 140. In the above explanation of Step S3 in Fig. 11, 24 pieces of the ultrasonic elements 111 with the element numbers of 21 ch to 44 ch are set as the transmission ultrasonic elements 112, so that the SN ratio information illustrated in Fig. 10, which is the SN ratio information corresponding to n = 24 pieces of the ultrasonic elements relating to the transmission ultrasonic elements 112, is acquired here. Further, when acquiring this SN ratio information, the SN ratio information is acquired also in consideration of the focusing region r of a transmission object.

Then, at Step S412, the reception ultrasonic element setting unit 122 extracts values of m that enable the first SN ratio to be equal to or more than a predetermined threshold value from the SN ratio information acquired at Step S411. Concretely, here, from the SN ratio information illustrated in Fig. 10, m = 24, 32, 48, and 64 are extracted as the value of m that enables the first SN ratio 1001 to be equal to or more than a fourth level value being a predetermined threshold value. On this occasion, the fourth level value set as a predetermined threshold value is one example of the SN ratio determined from the viewpoint of accuracy of detecting the defect 211.

Then, at Step S413, the reception ultrasonic element setting unit 122 selects, from the values of m extracted at Step S412, the value of m that enables at least one of the difference between the first SN ratio and a second SN ratio and the difference between the first SN ratio and a third SN ratio to be the smallest. Here, in the example illustrated in Fig. 10, from the values of m (m = 24, 32, 48, and 64) extracted at Step S412, the value of m that enables at least one of the difference between the first SN ratio 1001 and the second SN ratio 1002 and the difference between the first SN ratio 1001 and the third SN ratio 1003 to be the smallest is selected. Concretely, in the example illustrated in Fig. 10, in the case of m = 64, the difference between the first SN ratio 1001 and the third SN ratio 1003 becomes the smallest, which is 0.6 dB, and thus in this step, m = 64 is selected.

Then, at Step S414, the reception ultrasonic element setting unit 122 sets m pieces, being larger than n pieces, of the ultrasonic elements 111 including n pieces of the ultrasonic elements 111 relating to the transmission ultrasonic elements 112 as the reception ultrasonic elements 114 based on the value of m selected at Step S413. At Step S413 above, m = 64 is selected in Fig. 10, so that as the reception ultrasonic elements 114, m = 64 pieces of the ultrasonic elements 111 with ch 1 to ch 64 are set here. When the processing at Step S414 is finished, the first setting processing of the reception ultrasonic elements 114 illustrated in Fig. 14 is finished.

Fig. 15 is a flowchart illustrating one example of detailed processing procedures of second setting processing of the reception ultrasonic elements 114 at Step S4 in Fig. 11.

In the second setting processing illustrated in Fig. 15, first, similarly to Step S411 in Fig. 14, the reception ultrasonic element setting unit 122 acquires the SN ratio information corresponding to n pieces of the ultrasonic elements relating to the transmission ultrasonic elements 112 set at Step S3 in Fig. 11 from the SN ratio information 141 stored in the storage unit 140. Here, similarly to the explanation of Step S411 in Fig. 14, the SN ratio information illustrated in Fig. 10, which is the SN ratio information corresponding to n = 24 pieces of the ultrasonic elements relating to the transmission ultrasonic elements 112, is acquired. Further, when acquiring this SN ratio information, the SN ratio information is acquired also in consideration of the focusing region r of a transmission object.

Then, at Step S421, the reception ultrasonic element setting unit 122 extracts values of m that enable the first SN ratio, the second SN ratio, and the third SN ratio to be equal to or more than a predetermined threshold value from the SN ratio information acquired at Step S411. Concretely, here, from the SN ratio information illustrated in Fig. 10, m = 48, 64 are extracted as the value of m that enables the first SN ratio 1001, the second SN ratio 1002, and the third SN ratio 1003 to be equal to or more than the fourth level value being a predetermined threshold value. On this occasion, the fourth level value set as a predetermined threshold value is one example of the SN ratio determined from the viewpoint of accuracy of detecting the defect 211.

Then, at Step S422, the reception ultrasonic element setting unit 122 selects, from the values of m extracted at Step S421, the value of m that enables at least one of the difference between the first SN ratio and the second SN ratio and the difference between the first SN ratio and the third SN ratio to be the smallest. Here, in the example illustrated in Fig. 10, from the values of m (m = 48, 64) extracted at Step S421, the value of m that enables at least one of the difference between the first SN ratio 1001 and the second Sn ratio 1002 and the difference between the first SN ratio 1001 and the third SN ratio 1003 to be the smallest is selected. Concretely, in the example illustrated in Fig. 10, in the case of m = 64, the difference between the first SN ratio 1001 and the third SN ratio 1003 becomes the smallest, which is 0.6 dB, and thus in this step, m = 64 is selected.

Then, at Step S423, the reception ultrasonic element setting unit 122 sets m pieces, being larger than n pieces, of the ultrasonic elements 111 including n pieces of the ultrasonic elements 111 relating to the transmission ultrasonic elements 112 as the reception ultrasonic elements 114 based on the value of m selected at Step S422. At Step S422 above, m = 64 is selected in Fig. 10, so that as the reception ultrasonic elements 114, m = 64 pieces of the ultrasonic elements 111 with ch 1 to ch 64 are set here. When the processing at Step S423 is finished, the second setting processing of the reception ultrasonic elements 114 illustrated in Fig. 15 is finished.

Fig. 16 is a flowchart illustrating one example of detailed processing procedures of third setting processing of the reception ultrasonic elements 114 at Step S4 in Fig. 11.

In the third setting processing illustrated in Fig. 16, first, similarly to Step S411 in Fig. 14, the reception ultrasonic element setting unit 122 acquires the SN ratio information corresponding to n pieces of the ultrasonic elements relating to the transmission ultrasonic elements 112 set at Step S3 in Fig. 11 from the SN ratio information 141 stored in the storage unit 140. Here, similarly to the explanation of Step S411 in Fig. 14, the SN ratio information illustrated in Fig. 10, which is the SN ratio information corresponding to n = 24 pieces of the ultrasonic elements relating to the transmission ultrasonic elements 112, is acquired. Further, when acquiring this SN ratio information, the SN ratio information is acquired also in consideration of the focusing region r of a transmission object.

Then, similarly to Step S412 in Fig. 14, the reception ultrasonic element setting unit 122 extracts values of m that enable the first SN ratio to be equal to or more than a predetermined threshold value from the SN ratio information acquired at Step S411. Concretely, here, from the SN ratio information illustrated in Fig. 10, m = 24, 32, 48, and 64 are extracted as the value of m that enables the first SN ratio 1001 to be equal to or more than the fourth level value being a predetermined threshold value.

Then, at Step S431, the reception ultrasonic element setting unit 122 selects, from the values of m extracted at Step S412, the value of m that enables the sum of the difference between the first SN ratio and the second SN ratio and the difference between the first SN ratio and the third SN ratio to be the smallest. Here, in the example illustrated in Fig. 10, from the values of m (m = 24, 32, 48, and 64) extracted at Step S412, the value of m that enables the sum of the difference between the first SN ratio 1001 and the second SN ratio 1002 and the difference between the first SN ratio 1001 and the third SN ratio 1003 to be the smallest is selected. Concretely, in the example illustrated in Fig. 10, in the case of m = 64, the difference between the first SN ratio 1001 and the second SN ratio 1002 is 0.8 dB, the difference between the first SN ratio 1001 and the third SN ratio 1003 is 0.6 dB, and the sum of these differences becomes the smallest, which is 1.4 dB, and thus in this step, m = 64 is selected.

Then, at Step S432, the reception ultrasonic element setting unit 122 sets m pieces, being larger than n pieces, of the ultrasonic elements 111 including n pieces of the ultrasonic elements 111 relating to the transmission ultrasonic elements 112 as the reception ultrasonic elements 114 based on the value of m selected at Step S431. At Step S431 above, m = 64 is selected in Fig. 10, so that as the reception ultrasonic elements 114, m = 64 pieces of the ultrasonic elements 111 with ch 1 to ch 64 are set here. When the processing at Step S432 is finished, the third setting processing of the reception ultrasonic elements 114 illustrated in Fig. 16 is finished.

Fig. 17 is a flowchart illustrating one example of detailed processing procedures of fourth setting processing of the reception ultrasonic elements 114 at Step S4 in Fig. 11.

In the fourth setting processing illustrated in Fig. 17, first, similarly to Step S411 in Fig. 14, the reception ultrasonic element setting unit 122 acquires the SN ratio information corresponding to n pieces of the ultrasonic elements relating to the transmission ultrasonic elements 112 set at Step S3 in Fig. 11 from the SN ratio information 141 stored in the storage unit 140. Here, similarly to the explanation of Step S411 in Fig. 14, the SN ratio information illustrated in Fig. 10, which is the SN ratio information corresponding to n = 24 pieces of the ultrasonic elements relating to the transmission ultrasonic elements 112, is acquired. Further, when acquiring this SN ratio information, the SN ratio information is acquired also in consideration of the focusing region r of a transmission object.

Then, similarly to Step S421 in Fig. 15, the reception ultrasonic element setting unit 122 extracts values of m that enable the first SN ratio, the second SN ratio, and the third SN ratio to be equal to or more than a predetermined threshold value from the SN ratio information acquired at Step S411. Concretely, here, from the SN ratio information illustrated in Fig. 10, m = 48, 64 are extracted as the value of m that enables the first SN ratio 1001, the second SN ratio 1002, and the third SN ratio 1003 to be equal to or more than the fourth level value being a predetermined threshold value.

Then, at Step S441, the reception ultrasonic element setting unit 122 selects, from the values of m extracted at Step S421, the value of m that enables the sum of the difference between the first SN ratio and the second SN ratio and the difference between the first SN ratio and the third SN ratio to be the smallest. Here, in the example illustrated in Fig. 10, from the values of m (m = 48, 64) extracted at Step S421, the value of m that enables the sum of the difference between the first SN ratio 1001 and the second SN ratio 1002 and the difference between the first SN ratio 1001 and the third SN ratio 1003 to be the smallest is selected. Concretely, in the example illustrated in Fig. 10, in the case of m = 64, the difference between the first SN ratio 1001 and the second SN ratio 1002 is 0.8 dB, the difference between the first SN ratio 1001 and the third SN ratio 1003 is 0.6 dB, and the sum of these differences becomes the smallest, which is 1.4 dB, and thus in this step, m = 64 is selected.

Then, at Step S442, the reception ultrasonic element setting unit 122 sets m pieces, being larger than n pieces, of the ultrasonic elements 111 including n pieces of the ultrasonic elements 111 relating to the transmission ultrasonic elements 112 as the reception ultrasonic elements 114 based on the value of m selected at Step S441. At Step S441 above, m = 64 is selected in Fig. 10, so that as the reception ultrasonic elements 114, m = 64 pieces of the ultrasonic elements 111 with ch 1 to ch 64 are set here. When the processing at Step S442 is finished, the fourth setting processing of the reception ultrasonic elements 114 illustrated in Fig. 17 is finished.

Incidentally, the SN ratio information 141 illustrated in Fig. 10 is the SN ratio information in the case where the ultrasonic beams 113 are transmitted to the center portion of the calibration pipe 300 in the thickness direction as illustrated in Fig. 9A, and thus corresponds to the SN ratio information to be used for performing the defect detection processing of the focusing region r2 illustrated in Fig. 12B or Fig. 13B. In this case, the SN ratio information used for performing the defect detection processing of the focusing region r1 illustrated in Fig. 12A or Fig. 13A and the SN ratio information used for performing the defect detection processing of the focusing region r3 illustrated in Fig. 12C or Fig. 13C can be different from the SN ratio information used for performing the defect detection processing of the focusing region r2 illustrated in Fig. 10. For example, the relationship between the element number n of the transmission ultrasonic elements 112 and the element number m of the reception ultrasonic elements 114 can be different from that of the case of the focusing region r2 illustrated in Fig. 10 (namely, there is a possibility that m changes). Further, Fig. 12A to Fig. 12C and Fig. 13A to Fig. 13C above illustrate the example where the focusing region number R is three, but this embodiment is not limited to this mode, and for example, a mode in which plural numbers other than three are used as the focusing region number R is also applicable to this embodiment.

As explained above, the defect detection device 100 according to this embodiment is designed so that the transmission unit 131 sets n pieces of the ultrasonic elements 111, being some of a plurality of the ultrasonic elements 111 composing the phased array probe 110, as the transmission ultrasonic elements 112 to transmit the ultrasonic beams 113 toward the welded part 210 through the outer surface 200G of the welded steel pipe 200 from the transmission ultrasonic elements 112. Further, it is designed so that the reception ultrasonic element setting unit 122 sets m pieces, being larger than n pieces, of the ultrasonic elements 111 including n pieces of the ultrasonic elements relating to the transmission ultrasonic elements 112 as the reception ultrasonic elements 114 in consideration of the SN ratio relating to the reflected ultrasonic beams in the case where the welded part 210 is displaced in the circumferential direction of the welded steel pipe 200 relative to the phased array probe 110 (concretely, with reference to the SN ratio information 141 stored in the storage unit 140 (for example, the SN ratio information illustrated in Fig. 10)). Then, it is designed so that the reception unit 132 receives the reflected ultrasonic beams being the ultrasonic beams 113 reflected by the welded steel pipe 200 including the welded part 210 via the reception ultrasonic elements 114 and the defect determination unit 124 determines whether or not the defect 211 is present in the welded part 210 based on the reflected ultrasonic beams received by the reception unit 132.

According to such a configuration, the reception ultrasonic elements 114 are set in consideration of the SN ratio relating to the reflected ultrasonic beams in the case where the welded part 210 is displaced in the circumferential direction of the welded steel pipe 200 relative to the phased array probe 110, so that as has been explained using Fig. 10, it is possible to suppress the decrease in accuracy of detecting the defect 211 in the case where the position of the welded part 210 is displaced in the circumferential direction of the welded steel pipe 200 from an expected position.

### <<Modified example of this embodiment>>

In the above-described embodiment of the present invention, the reception ultrasonic element setting unit 122 sets m pieces, being larger than n pieces, of the ultrasonic elements 111 including n pieces of the ultrasonic elements relating to the transmission ultrasonic elements 112 as the reception ultrasonic elements 114 in consideration of the SN ratio relating to the reflected ultrasonic beams in the case where the welded part 210 is displaced in the circumferential direction of the welded steel pipe 200 relative to the phased array probe 110 (concretely, with reference to the SN ratio information 141 stored in the storage unit 140 (for example, the SN ratio information illustrated in Fig. 10)). However, the present invention is not limited to this mode. For example, in the case where the noise level of the above-described reflected ultrasonic beams is extremely low and the noise is regarded as negligible, in place of the SN ratio relating to the reflected ultrasonic beams in the above-described embodiment of the present invention, an echo height relating to the reflected ultrasonic beams is applicable. Hereinafter, as a modified example of this embodiment, the case where the echo height relating to the reflected ultrasonic beams is applied will be explained.

First, in the case of the modified example of this embodiment, a mode in which the storage unit 140 illustrated in Fig. 1 stores echo height information in place of the SN ratio information 141 is employed. Then, in the case of employing the echo height information, as the vertical axis illustrated in Fig. 10, the echo height is employed in place of the SN ratio. On this occasion, this echo height is the same in concept as the echo height illustrated at the vertical axis in Fig. 8 and Fig. 9B to Fig. 9D.

Next, there will be explained detailed processing procedures of setting processing of the reception ultrasonic elements 114 at Step S4 in Fig. 11 in the case of employing the modified example of this embodiment using Fig. 14 to Fig. 17.

First, there will be explained detailed processing procedures of first setting processing of the reception ultrasonic elements 114 at Step S4 in Fig. 11 in the modified example of this embodiment using Fig. 14.

In the first setting processing illustrated in Fig. 14, first at Step S411, the reception ultrasonic element setting unit 122 acquires echo height information corresponding to n pieces of the ultrasonic elements relating to the transmission ultrasonic elements 112 set at Step S3 in Fig. 11 from the echo height information applied in place of the SN ratio information 141 stored in the storage unit 140. In the above explanation of Step S3 in Fig. 11, 24 pieces of the ultrasonic elements 111 with the element numbers of 21 ch to 44 ch are set as the transmission ultrasonic elements 112, so that the echo height information applied in place of the SN ratio information illustrated in Fig. 10, which is the echo height information corresponding to n = 24 pieces of the ultrasonic elements relating to the transmission ultrasonic elements 112, is acquired here. Further, when acquiring this echo height information, the echo height information is acquired also in consideration of the focusing region r of a transmission object.

Then, at Step S412, the reception ultrasonic element setting unit 122 extracts values of m that enable a first echo height applied in place of the above-described first SN ratio to be equal to or more than a predetermined threshold value from the echo height information acquired at Step S411. Concretely, here, m = 24, 32, 48, and 64 are extracted as the value of m that enables the first echo height applied in place of the first SN ratio 1001 illustrated in Fig. 10 to be equal to or more than a fourth level value being a predetermined threshold value. On this occasion, the fourth level value set as a predetermined threshold value is one example of the echo height determined from the viewpoint of accuracy of detecting the defect 211.

Then, at Step S413, the reception ultrasonic element setting unit 122 selects, from the values of m extracted at Step S412, the value of m that enables at least one of the difference between the first echo height applied in place of the first SN ratio and a second echo height applied in place of the second SN ratio and the difference between the first echo height and a third echo height applied in place of the third SN ratio to be the smallest. Here, in the example illustrated in Fig. 10, from the values of m (m = 24, 32, 48, and 64) extracted at Step S412, the value of m that enables at least one of the difference between the first echo height applied in place of the first SN ratio 1001 and the second echo height applied in place of the second SN ratio 1002 and the difference between the first echo height applied in place of the first SN ratio 1001 and the third echo height applied in place of the third SN ratio 1003 to be the smallest is selected. Concretely, in the example illustrated in Fig. 10, in the case of m = 64, the difference between the first echo height information applied in place of the first SN ratio 1001 and the third echo height applied in place of the third SN ratio 1003 becomes the smallest, and thus in this step, m = 64 is selected.

Then, at Step S414, the reception ultrasonic element setting unit 122 sets m pieces, being larger than n pieces, of the ultrasonic elements 111 including n pieces of the ultrasonic elements 111 relating to the transmission ultrasonic elements 112 as the reception ultrasonic elements 114 based on the value of m selected at Step S413. At Step S413 above, m = 64 is selected in Fig. 10, so that as the reception ultrasonic elements 114, m = 64 pieces of the ultrasonic elements 111 with ch 1 to ch 64 are set here. When the processing at Step S414 is finished, the first setting processing of the reception ultrasonic elements 114 illustrated in Fig. 14 is finished.

Next, there will be explained detailed processing procedures of second setting processing of the reception ultrasonic elements 114 at Step S4 in Fig. 11 in the modified example of this embodiment using Fig. 15.

In the second setting processing illustrated in Fig. 15, first, similarly to Step S411 in Fig. 14, the reception ultrasonic element setting unit 122 acquires the echo height information corresponding to n pieces of the ultrasonic elements relating to the transmission ultrasonic elements 112 set at Step S3 in Fig. 11 from the echo height information applied in place of the SN ratio information 141 stored in the storage unit 140. Here, similarly to the explanation of Step S411 in Fig. 14, the echo height information applied in place of the SN ratio information illustrated in Fig. 10, which is the echo height information corresponding to n = 24 pieces of the ultrasonic elements relating to the transmission ultrasonic elements 112, is acquired. Further, when acquiring this echo height information, the echo height information is acquired also in consideration of the focusing region r of a transmission object.

Then, at Step S421, the reception ultrasonic element setting unit 122 extracts values of m that enable the first echo height applied in place of the above-described first SN ratio, the second echo height applied in place of the second SN ratio, and the third echo height applied in place of the third SN ratio to be equal to or more than a predetermined threshold value from the echo height information acquired at Step S411. Concretely, here, m = 48, 64 are extracted as the value of m that enables the first echo height applied in place of the first SN ratio 1001 illustrated in Fig. 10, the second echo height applied in place of the second SN ratio 1002, and the third echo height applied in place of the third SN ratio 1003 to be equal to or more than the fourth level value being a predetermined threshold value. On this occasion, the fourth level value set as a predetermined threshold value is one example of the echo height determined from the viewpoint of accuracy of detecting the defect 211.

Then, at Step S422, the reception ultrasonic element setting unit 122 selects, from the values of m extracted at Step S421, the value of m that enables at least one of the difference between the first echo height applied in place of the first SN ratio and the second echo height applied in place of the second SN ratio and the difference between the first echo height and the third echo height applied in place of the third SN ratio to be the smallest. Here, in the example illustrated in Fig. 10, from the values of m (m = 48, 64) extracted at Step S421, the value of m that enables at least one of the difference between the first echo height applied in place of the first SN ratio 1001 and the second echo height applied in place of the second SN ratio 1002 and the difference between the first echo height applied in place of the first SN ratio 1001 and the third echo height applied in place of the third SN ratio 1003 to be the smallest is selected. Concretely, in the example illustrated in Fig. 10, in the case of m = 64, the difference between the first echo height applied in place of the first SN ratio 1001 and the third echo height applied in place of the third SN ratio 1003 becomes the smallest, and thus in this step, m = 64 is selected.

Then, at Step S423, the reception ultrasonic element setting unit 122 sets m pieces, being larger than n pieces, of the ultrasonic elements 111 including n pieces of the ultrasonic elements 111 relating to the transmission ultrasonic elements 112 as the reception ultrasonic elements 114 based on the value of m selected at Step S422. At Step S422 above, m = 64 is selected in Fig. 10, so that as the reception ultrasonic elements 114, m = 64 pieces of the ultrasonic elements 111 with ch 1 to ch 64 are set here. When the processing at Step S423 is finished, the second setting processing of the reception ultrasonic elements 114 illustrated in Fig. 15 is finished.

Next, there will be explained detailed processing procedures of third setting processing of the reception ultrasonic elements 114 at Step S4 in Fig. 11 in the modified example of this embodiment using Fig. 16.

In the third setting processing illustrated in Fig. 16, first, similarly to Step S411 in Fig. 14, the reception ultrasonic element setting unit 122 acquires the echo height information corresponding to n pieces of the ultrasonic elements relating to the transmission ultrasonic elements 112 set at Step S3 in Fig. 11 from the echo height information applied in place of the SN ratio information 141 stored in the storage unit 140. Here, similarly to the explanation of Step S411 in Fig. 14, the echo height information applied in place of the SN ratio information illustrated in Fig. 10, which is the echo height information corresponding to n = 24 pieces of the ultrasonic elements relating to the transmission ultrasonic elements 112, is acquired. Further, when acquiring this echo height information, the echo height information is acquired also in consideration of the focusing region r of a transmission object.

Then, similarly to Step S412 in Fig. 14, the reception ultrasonic element setting unit 122 extracts values of m that enable the first echo height applied in place of the above-described first SN ratio to be equal to or more than a predetermined threshold value from the echo height information acquired at Step S411. Concretely, here, m = 24, 32, 48, and 64 are extracted as the value of m that enables the first echo height applied in place of the first SN ratio 1001 illustrated in Fig. 10 to be equal to or more than the fourth level value being a predetermined threshold value.

Then, at Step S431, the reception ultrasonic element setting unit 122 selects, from the values of m extracted at Step S412, the value of m that enables the sum of the difference between the first echo height applied in place of the first SN ratio and the second echo height applied in place of the second SN ratio and the difference between the first echo height and the third echo height applied in place of the third SN ratio to be the smallest. Here, in the example illustrated in Fig. 10, from the values of m (m = 24, 32, 48, and 64) extracted at Step S412, the value of m that enables the sum of the difference between the first echo height applied in place of the first SN ratio 1001 and the second echo height applied in place of the second SN ratio 1002 and the difference between the first echo height applied in place of the first SN ratio 1001 and the third echo height applied in place of the third SN ratio 1003 to be the smallest is selected. Concretely, in the example illustrated in Fig. 10, in the case of m = 64, the sum of the difference between the first echo height applied in place of the first SN ratio 1001 and the second echo height applied in place of the second SN ratio 1002 and the difference between the first echo height applied in place of the first SN ratio 1001 and the third echo height applied in place of the third SN ratio 1003 becomes the smallest, and thus in this step, m = 64 is selected.

Then, at Step S432, the reception ultrasonic element setting unit 122 sets m pieces, being larger than n pieces, of the ultrasonic elements 111 including n pieces of the ultrasonic elements 111 relating to the transmission ultrasonic elements 112 as the reception ultrasonic elements 114 based on the value of m selected at Step S431. At Step S431 above, m = 64 is selected in Fig. 10, so that as the reception ultrasonic elements 114, m = 64 pieces of the ultrasonic elements 111 with ch 1 to ch 64 are set here. When the processing at Step S432 is finished, the third setting processing of the reception ultrasonic elements 114 illustrated in Fig. 16 is finished.

Next, there will be explained detailed processing procedures of fourth setting processing of the reception ultrasonic elements 114 at Step S4 in Fig. 11 in the modified example of this embodiment using Fig. 17.

In the fourth setting processing illustrated in Fig. 17, first, similarly to Step S411 in Fig. 14, the reception ultrasonic element setting unit 122 acquires the echo height information corresponding to n pieces of the ultrasonic elements relating to the transmission ultrasonic elements 112 set at Step S3 in Fig. 11 from the echo height information applied in place of the SN ratio information 141 stored in the storage unit 140. Here, similarly to the explanation of Step S411 in Fig. 14, the echo height information applied in place of the SN ratio information illustrated in Fig. 10, which is the echo height information corresponding to n = 24 pieces of the ultrasonic elements relating to the transmission ultrasonic elements 112, is acquired. Further, when acquiring this echo height information, the echo height information is acquired also in consideration of the focusing region r of a transmission object.

Then, similarly to Step S421 in Fig. 15, the reception ultrasonic elements setting unit 122 extracts values of m that enable the first echo height applied in place of the first SN ratio, the second echo height applied in place of the second SN ratio, and the third echo height applied in place of the third SN ratio to be equal to or more than a predetermined threshold value from the echo height information acquired at Step S411. Concretely, here, m = 48, 64 are extracted as the value of m that enables the first echo height applied in place of the first SN ratio 1001 illustrated in Fig. 10, the second echo height applied in place of the second SN ratio 1002, and the third echo height applied in place of the third SN ratio 1003 to be equal to or more than the fourth level value being a predetermined threshold value.

Then, at Step S441, the reception ultrasonic element setting unit 122 selects, from the values of m extracted at Step S421, the value of m that enables the sum of the difference between the first echo height applied in place of the first SN ratio and the second echo height applied in place of the second SN ratio and the difference between the first echo height and the third echo height applied in place of the third SN ratio to be the smallest. Here, in the example illustrated in Fig. 10, from the values of m (m = 48, 64) extracted at Step S421, the value of m that enables the sum of the difference between the first echo height applied in place of the first SN ratio 1001 and the second echo height applied in place of the second SN ratio 1002 and the difference between the first echo height applied in place of the first SN ratio 1001 and the third echo height applied in place of the third SN ratio 1003 to be the smallest is selected. Concretely, in the example illustrated in Fig. 10, in the case of m = 64, the sum of the difference between the first echo height applied in place of the first SN ratio 1001 and the second echo height applied in place of the second SN ratio 1002 and the difference between the first echo height applied in place of the first SN ratio 1001 and the third echo height applied in place of the third SN ratio 1003 becomes the smallest, and thus in this step, m = 64 is selected.

Then, at Step S442, the reception ultrasonic element setting unit 122 sets m pieces, being larger than n pieces, of the ultrasonic elements 111 including n pieces of the ultrasonic elements 111 relating to the transmission ultrasonic elements 112 as the reception ultrasonic elements 114 based on the value of m selected at Step S441. At Step S441 above, m = 64 is selected in Fig. 10, so that as the reception ultrasonic elements 114, m = 64 pieces of the ultrasonic elements 111 with ch 1 to ch 64 are set here. When the processing at Step S442 is finished, the fourth setting processing of the reception ultrasonic elements 114 illustrated in Fig. 17 is finished.

Also in the above-explained modified example of this embodiment, similarly to the above-described embodiment of the present invention, as has been explained using Fig. 10, it is possible to suppress the decrease in accuracy of detecting the defect 211 in the case where the position of the welded part 210 is displaced in the circumferential direction of the welded steel pipe 200 from an expected position.

### (Another embodiment)

The present invention can be achieved also by processing in which a program implementing one or more functions of the above-described embodiment is supplied to a system or a device via a network or a storage medium and one or more processors in a computer of the system or the device read and execute the program. Further, the present invention can be achieved also by a circuit implementing one or more functions (for example, ASIC).

The program and a computer-readable storage medium in which the program is stored are included in the present invention.

It should be noted that the above-described embodiments of the present invention merely illustrate concrete examples of implementing the present invention, and the technical scope of the present invention is not to be construed in a restrictive manner by these embodiments. That is, the present invention may be implemented in various forms without departing from the technical scope of the present invention.

## Claims

1. A defect detection device (100) being a defect detection device that detects a defect present in a welded part formed along a pipe longitudinal of a welded steel pipe, the defect detection device comprising:
a phased array probe (110) that is installed outside an outer surface of the welded steel pipe and includes a plurality of ultrasonic elements (111) arranged therein;
a transmission means (131) configured to set n pieces of the ultrasonic elements, being some of a plurality of the ultrasonic elements (111) composing the phased array probe (110), as transmission ultrasonic elements (112) and to transmit ultrasonic beams toward the welded part through the outer surface of the welded steel pipe from the transmission ultrasonic elements (112);
a reception means (132) configured to receive reflected ultrasonic beams being the ultrasonic beams reflected by the welded steel pipe including the welded part via reception ultrasonic elements (114) consisting of m pieces, being larger than and including the n pieces of the ultrasonic elements composing the transmission ultrasonic elements (112), out of a plurality of the ultrasonic elements (111) composing the phased array probe (110); and
a defect determination means (124) configured to determine whether or not a defect is present in the welded part based on the reflected ultrasonic beams received by the reception means (132).

2. The defect detection device according to claim 1, wherein
the reception ultrasonic elements (114) are set by using a calibration pipe, being a steel pipe for calibrating the welded steel pipe, that has an artificial defect formed in a second welded part corresponding to the welded part based on a first SN ratio, a second SN ratio, and a third SN ratio according to the value of m, being SN ratios relating to the reflected ultrasonic beams that are acquired while changing the value of m of m pieces of the ultrasonic elements relating to the reception ultrasonic elements (114) relative to n pieces of the ultrasonic elements relating to the transmission ultrasonic elements (112), the first SN ratio being an SN ratio relating to the reflected ultrasonic beams from the artificial defect in the case where the second welded part is provided at a first position in the circumferential direction of the calibration pipe relative to the phased array probe (110), the second SN ratio being an SN ratio relating to the reflected ultrasonic beams from the artificial defect in the case where the second welded part is provided at a second position that is displaced clockwise by an angle *α* from the first position in the circumferential direction of the calibration pipe relative to the phased array probe (110), and the third SN ratio being an SN ratio relating to the reflected ultrasonic beams from the artificial defect in the case where the second welded part is provided at a third position that is displaced counterclockwise by an angle *β* from the first position in the circumferential direction of the calibration pipe relative to the phased array probe (110).

3. The defect detection device according to claim 2, wherein
the reception ultrasonic elements (114) are set based on the value of m that enables at least one of the difference between the first SN ratio and the second SN ratio and the difference between the first SN ratio and the third SN ratio to be the smallest.

4. The defect detection device according to claim 2, wherein
the reception ultrasonic elements (114) are set based on the value of m that enables the sum of the difference between the first SN ratio and the second SN ratio and the difference between the first SN ratio and the third SN ratio to be the smallest.

5. The defect detection device according to claim 3 or 4, wherein
values of m that enable the first SN ratio to be equal to or more than a predetermined threshold value are extracted, from the extracted values of m, the value of m to be the smallest is selected, and the reception ultrasonic elements (114) are set based on the selected value of m.

6. The defect detection device according to claim 3 or 4, wherein
values of m that enable the first SN ratio, the second SN ratio, and the third SN ratio to be equal to or more than a predetermined threshold value are extracted, from the extracted values of m, the value of m to be the smallest is selected, and the reception ultrasonic elements (114) are set based on the selected value of m.

7. The defect detection device according to claim 1, wherein
the reception ultrasonic elements (114) are set by using a calibration pipe, being a steel pipe for calibrating the welded steel pipe, that has an artificial defect formed in a second welded part corresponding to the welded part based on a first echo height, a second echo height, and a third echo height according to the value of m, being echo intensities relating to the reflected ultrasonic beams that are acquired while changing the value of m of m pieces of the ultrasonic elements relating to the reception ultrasonic elements (114) relative to n pieces of the ultrasonic elements relating to the transmission ultrasonic elements (112), the first echo height being an echo height relating to the reflected ultrasonic beams from the artificial defect in the case where the second welded part is provided at a first position in the circumferential direction of the calibration pipe relative to the phased array probe (110), the second echo height being an echo height relating to the reflected ultrasonic beams from the artificial defect in the case where the second welded part is provided at a second position that is displaced clockwise by an angle *α* from the first position in the circumferential direction of the calibration pipe relative to the phased array probe (110), and the third echo height being an echo height relating to the reflected ultrasonic beams from the artificial defect in the case where the second welded part is provided at a third position that is displaced counterclockwise by an angle *β* from the first position in the circumferential direction of the calibration pipe relative to the phased array probe (110).

8. The defect detection device according to claim 7, wherein
the reception ultrasonic elements (114) are set based on the value of m that enables at least one of the difference between the first echo height and the second echo height and the difference between the first echo height and the third echo height to be the smallest.

9. The defect detection device according to claim 7, wherein
the reception ultrasonic elements (114) are set based on the value of m that enables the sum of the difference between the first echo height and the second echo height and the difference between the first echo height and the third echo height to be the smallest.

10. The defect detection device according to claim 8 or 9, wherein
values of m that enable the first echo height to be equal to or more than a predetermined threshold value are extracted, from the extracted values of m, the value of m to be the smallest is selected, and the reception ultrasonic elements (114) are set based on the selected value of m.

11. The defect detection device according to claim 8 or 9, wherein
values of m that enable the first echo height, the second echo height, and the third echo height to be equal to or more than a predetermined threshold value are extracted, from the extracted values of m, the value of m to be the smallest is selected, and the reception ultrasonic elements (114) are set based on the selected value of m.

12. The defect detection device according to any one of claims 1 to 11, wherein
the transmission means (131) transmits the ultrasonic beams to make the ultrasonic beams that have entered the welded steel pipe through the outer surface of the welded steel pipe directly incident on the welded part substantially vertically without reflecting on an inner surface of the welded steel pipe and focus on the welded part.

13. A defect detection method being a defect detection method by a defect detection device that includes a phased array probe (110) installed outside an outer surface of a welded steel pipe and including a plurality of ultrasonic elements (111) arranged therein and detects a defect present in a welded part formed along a pipe longitudinal of the welded steel pipe, the defect detection method comprising:
a transmission step that sets n pieces of the ultrasonic elements, being some of a plurality of the ultrasonic elements (111) composing the phased array probe (110), as transmission ultrasonic elements (112) and transmits ultrasonic beams toward the welded part through the outer surface of the welded steel pipe from the transmission ultrasonic elements (112);
a reception step that receives reflected ultrasonic beams being the ultrasonic beams reflected by the welded steel pipe including the welded part via reception ultrasonic elements (114) consisting of m pieces, being larger than and including the n pieces of the ultrasonic elements composing the transmission ultrasonic elements (112), out of a plurality of the ultrasonic elements (111) composing the phased array probe (110); and
a defect determination step that determines whether or not a defect is present in the welded part based on the reflected ultrasonic beams received by the reception step.

14. A computer program comprising instructions to cause the device of any of claims 1 to 12 to execute:
a transmission step that sets n pieces of the ultrasonic elements, being some of a plurality of the ultrasonic elements (111) composing the phased array probe (110), as transmission ultrasonic elements (112) and transmits ultrasonic beams toward the welded part through the outer surface of the welded steel pipe from the transmission ultrasonic elements (112);
a reception step that receives reflected ultrasonic beams being the ultrasonic beams reflected by the welded steel pipe including the welded part via reception ultrasonic elements (114) consisting of m pieces, being larger than and including the n pieces of the ultrasonic elements composing the transmission ultrasonic elements (112), out of a plurality of the ultrasonic elements (111) composing the phased array probe (110); and
a defect determination step that determines whether or not a defect is present in the welded part based on the reflected ultrasonic beams received by the reception step.

## Patentansprüche

1. Fehlererkennungsvorrichtung (100), die eine Fehlererkennungsvorrichtung ist, die einen Fehler erkennt, der in einem geschweißten Teil vorhanden ist, der entlang einer Rohrlängsrichtung eines geschweißten Stahlrohrs ausgebildet ist, wobei die Fehlererkennungsvorrichtung aufwei st:
eine Phased-Array-Sonde (110), die außerhalb einer Außenfläche des geschweißten Stahlrohrs installiert ist und mehrere darin angeordnete Ultraschallelemente (111) enthält;
eine Sendeeinrichtung (131), die konfiguriert ist, n Stücke der Ultraschallelemente, die einige von mehreren Ultraschallelementen (111) sind, die die Phased-Array-Sonde (110) bilden, als Sende-Ultraschallelemente (112) einzustellen und Ultraschallstrahlen von den Sende-Ultraschallelementen (112) durch die Außenfläche des geschweißten Stahlrohrs zum geschweißten Teil zu senden;
eine Empfangseinrichtung (132), die konfiguriert ist, reflektierte Ultraschallstrahlen, die die Ultraschallstrahlen sind, die von dem geschweißten Stahlrohr reflektiert werden, das den geschweißten Teil enthält, über Empfangs-Ultraschallelemente (114) zu empfangen, die aus m Stücken bestehen, die größer sind als die n Stücke der Ultraschallelemente, die die Sende-Ultraschallelemente (112) bilden, und diese enthalten, aus mehreren der Ultraschallelemente (111), die die Phased-Array-Sonde (110) bilden; und
eine Fehlerbestimmungseinrichtung (124), die konfiguriert ist zu bestimmen, ob ein Fehler in dem geschweißten Teil vorhanden ist oder nicht, basierend auf den von der Empfangseinrichtung (132) empfangenen reflektierten Ultraschallstrahlen.

2. Fehlererkennungsvorrichtung nach Anspruch 1, wobei
die Empfangs-Ultraschallelemente (114) unter Verwendung eines Kalibrierungsrohrs eingestellt werden, das ein Stahlrohr zum Kalibrieren des geschweißten Stahlrohrs ist, das einen künstlichen Fehler aufweist, der in einem zweiten geschweißten Teil ausgebildet ist, der dem geschweißten Teil entspricht, basierend auf einem ersten SN-Verhältnis, einem zweiten SN-Verhältnis und einem dritten SN-Verhältnis gemäß dem Wert von m, wobei es sich um SN-Verhältnisse handelt, die sich auf die reflektierten Ultraschallstrahlen beziehen, die erfasst werden, während der Wert von m von m Stücken der Ultraschallelemente, die sich auf die Empfangs-Ultraschallelemente (114) beziehen, relativ zu n Stücken der Ultraschallelemente geändert wird, die sich auf die Sende-Ultraschallelemente (112) beziehen, wobei das erste SN-Verhältnis ein SN-Verhältnis ist, das sich auf die reflektierten Ultraschallstrahlen vom künstlichen Fehler in dem Fall bezieht, in dem der zweite geschweißte Teil an einer ersten Position in der Umfangsrichtung des Kalibrierungsrohrs relativ zur Phased-Array-Sonde (110) vorgesehen ist, das zweite SN-Verhältnis ein SN-Verhältnis ist, das sich auf die reflektierten Ultraschallstrahlen vom künstlichen Fehler in dem Fall bezieht, in dem der zweite geschweißte Teil an einer zweiten Position vorgesehen ist, die um einen Winkel α im Uhrzeigersinn von der ersten Position in der Umfangsrichtung des Kalibrierungsrohrs relativ zur Phased-Array-Sonde (110) verschoben ist, und das dritte SN-Verhältnis ein SN-Verhältnis ist, das sich auf die reflektierten Ultraschallstrahlen vom künstlichen Fehler in dem Fall bezieht, in dem das zweite geschweißte Teil an einer dritten Position vorgesehen ist, die um einen Winkel β gegen den Uhrzeigersinn von der ersten Position in der Umfangsrichtung des Kalibrierungsrohrs relativ zur Phased-Array-Sonde (110) verschoben ist.

3. Fehlererkennungsvorrichtung nach Anspruch 2, wobei
die Empfangs-Ultraschallelemente (114) basierend auf dem Wert von m eingestellt werden, der es ermöglicht, dass die Differenz zwischen dem ersten SN-Verhältnis und dem zweiten SN-Verhältnis und/oder die Differenz zwischen dem ersten SN-Verhältnis und dem dritten SN-Verhältnis am kleinsten ist.

4. Fehlererkennungsvorrichtung nach Anspruch 2, wobei
die Empfangs-Ultraschallelemente (114) basierend auf dem Wert von m eingestellt werden, der ermöglicht, dass die Summe der Differenz zwischen dem ersten SN-Verhältnis und dem zweiten SN-Verhältnis und der Differenz zwischen dem ersten SN-Verhältnis und dem dritten SN-Verhältnis am kleinsten ist.

5. Fehlererkennungsvorrichtung nach Anspruch 3 oder 4, wobei
Werte von m, die es ermöglichen, dass das erste SN-Verhältnis gleich oder größer als ein vorbestimmter Schwellenwert ist, extrahiert werden, aus den extrahierten Werten von m der Wert von m ausgewählt wird, der der kleinste ist, und die Empfangs-Ultraschallelemente (114) basierend auf dem ausgewählten Wert von m eingestellt werden.

6. Fehlererkennungsvorrichtung nach Anspruch 3 oder 4, wobei
Werte von m, die es ermöglichen, dass das erste SN-Verhältnis, das zweite SN-Verhältnis und das dritte SN-Verhältnis gleich oder größer als ein vorbestimmter Schwellenwert sind, extrahiert werden, aus den extrahierten Werten von m der Wert von m, der der kleinste ist, ausgewählt wird, und die Empfangs-Ultraschallelemente (114) basierend auf dem ausgewählten Wert von m eingestellt werden.

7. Fehlererkennungsvorrichtung nach Anspruch 1, wobei
die Empfangs-Ultraschallelemente (114) unter Verwendung eines Kalibrierungsrohrs eingestellt werden, bei dem es sich um ein Stahlrohr zum Kalibrieren des geschweißten Stahlrohrs handelt, das einen künstlichen Fehler aufweist, der in einem zweiten geschweißten Teil ausgebildet ist, der dem geschweißten Teil entspricht, basierend auf einer ersten Echohöhe, einer zweiten Echohöhe und einer dritten Echohöhe gemäß dem Wert von m, die Echointensitäten sind, die sich auf die reflektierten Ultraschallstrahlen beziehen, die erfasst werden, während der Wert von m von m Stücken der Ultraschallelemente, die sich auf die Empfangs-Ultraschallelemente (114) beziehen, relativ zu n Stücken der Ultraschallelemente, die sich auf die Sende-Ultraschallelemente (112) beziehen, geändert wird, wobei die erste Echohöhe eine Echohöhe ist, die sich auf die reflektierten Ultraschallstrahlen vom künstlichen Fehler in dem Fall bezieht, in dem der zweite geschweißte Teil an einer ersten Position in der Umfangsrichtung des Kalibrierungsrohrs relativ zur Phased-Array-Sonde (110) vorgesehen ist, die zweite Echohöhe eine Echohöhe ist, die sich auf die reflektierten Ultraschallstrahlen vom künstlichen Fehler in dem Fall bezieht, in dem der zweite geschweißte Teil an einer zweiten Position vorgesehen ist, die im Uhrzeigersinn um einen Winkel α von der ersten Position in der Umfangsrichtung des Kalibrierungsrohrs relativ zur Phased-Array-Sonde (110) verschoben ist, und die dritte Echohöhe eine Echohöhe ist, die sich auf die reflektierten Ultraschallstrahlen vom künstlichen Fehler in dem Fall bezieht, in dem der zweite geschweißte Teil an einer dritten Position vorgesehen ist, die gegen den Uhrzeigersinn um einen Winkel β von der ersten Position in der Umfangsrichtung des Kalibrierungsrohrs relativ zur Phased-Array-Sonde (110) verschoben ist.

8. Fehlererkennungsvorrichtung nach Anspruch 7, wobei
die Empfangs-Ultraschallelemente (114) basierend auf dem Wert von m eingestellt werden, der es ermöglicht, dass die Differenz zwischen der ersten Echohöhe und der zweiten Echohöhe und/oder die Differenz zwischen der ersten Echohöhe und der dritten Echohöhe am kleinsten ist.

9. Fehlererkennungsvorrichtung nach Anspruch 7, wobei
die Empfangs-Ultraschallelemente (114) basierend auf dem Wert von m eingestellt werden, der es ermöglicht, dass die Summe der Differenz zwischen der ersten Echohöhe und der zweiten Echohöhe und der Differenz zwischen der ersten Echohöhe und der dritten Echohöhe am kleinsten ist.

10. Fehlererkennungsvorrichtung nach Anspruch 8 oder 9, wobei
Werte von m, die es ermöglichen, dass die erste Echohöhe gleich oder größer als ein vorbestimmter Schwellenwert ist, extrahiert werden, aus den extrahierten Werten von m der Wert von m, der der kleinste ist, ausgewählt wird und die Empfangs-Ultraschallelemente (114) basierend auf dem ausgewählten Wert von m eingestellt werden.

11. Fehlererkennungsvorrichtung nach Anspruch 8 oder 9, wobei
Werte von m, die es ermöglichen, dass die erste Echohöhe, die zweite Echohöhe und die dritte Echohöhe gleich oder größer als ein vorbestimmter Schwellenwert sind, extrahiert werden, aus den extrahierten Werten von m der Wert von m, der der kleinste ist, ausgewählt wird, und die Empfangs-Ultraschallelemente (114) basierend auf dem ausgewählten Wert von m eingestellt werden.

12. Fehlererkennungsvorrichtung nach einem der Ansprüche 1 bis 11, wobei
die Sendeeinrichtung (131) die Ultraschallstrahlen sendet, um zu bewirken, dass die Ultraschallstrahlen, die durch die Außenfläche des geschweißten Stahlrohrs in das geschweißte Stahlrohr eingedrungen sind, direkt auf den geschweißten Teil im Wesentlichen vertikal auftreffen, ohne an einer Innenfläche des geschweißten Stahlrohrs reflektiert zu werden, und auf den geschweißten Teil zu fokussieren.

13. Fehlererkennungsverfahren, das ein Fehlererkennungsverfahren durch eine Fehlererkennungsvorrichtung ist, die eine Phased-Array-Sonde (110) aufweist, die außerhalb einer Außenfläche eines geschweißten Stahlrohrs installiert ist und mehrere darin angeordneten Ultraschallelemente (111) aufweist, und die einen Fehler erkennt, der in einem geschweißten Teil vorhanden ist, das entlang einer Rohrlängsrichtung des geschweißten Stahlrohrs ausgebildet ist, wobei das Fehlererkennungsverfahren aufweist:
einen Sendeschritt, der n Stücke der Ultraschallelemente, die einige von mehreren Ultraschallelemente (111) sind, die die Phased-Array-Sonde (110) bilden, als Sende-Ultraschallelemente (112) einstellt und Ultraschallstrahlen zum geschweißten Teil durch die Außenfläche des geschweißten Stahlrohrs von den Sende-Ultraschallelementen (112) sendet;
einen Empfangsschritt, der reflektierte Ultraschallstrahlen, die die Ultraschallstrahlen sind, die vom geschweißten Stahlrohr reflektiert werden, das den geschweißten Teil enthält, über Empfangs-Ultraschallelemente (114) empfängt, die aus m Stücken bestehen, die größer sind als die n Stücke der Ultraschallelemente, die die Sende-Ultraschallelemente (112) bilden, und diese enthalten, aus mehreren der Ultraschallelemente (111), die die Phased-Array-Sonde (110) bilden; und
einen Fehlerbestimmungsschritt, der basierend auf den durch den Empfangsschritt empfangenen reflektierten Ultraschallstrahlen bestimmt, ob ein Fehler in dem geschweißten Teil vorhanden ist oder nicht.

14. Computerprogramm, das Anweisungen aufweist, um die Vorrichtung nach einem der Ansprüche 1 bis 12 zu veranlassen auszuführen:
einen Sendeschritt, der n Stücke der Ultraschallelemente, die einige von mehreren Ultraschallelemente (111) sind, die die Phased-Array-Sonde (110) bilden, als Sende-Ultraschallelemente (112) einstellt und Ultraschallstrahlen zum geschweißten Teil durch die Außenfläche des geschweißten Stahlrohrs von den Sende-Ultraschallelementen (112) sendet;
einen Empfangsschritt, der reflektierte Ultraschallstrahlen, die die Ultraschallstrahlen sind, die vom geschweißten Stahlrohr reflektiert werden, das den geschweißten Teil enthält, über Empfangs-Ultraschallelemente (114) empfängt, die aus m Stücken bestehen, die größer sind als die n Stücke der Ultraschallelemente, die die Sende-Ultraschallelemente (112) bilden, und diese enthalten, aus mehreren der Ultraschallelemente (111), die die Phased-Array-Sonde (110) bilden; und
einen Fehlerbestimmungsschritt, der basierend auf den durch den Empfangsschritt empfangenen reflektierten Ultraschallstrahlen bestimmt, ob ein Fehler in dem geschweißten Teil vorhanden ist oder nicht.

## Revendications

1. Dispositif de détection de défaut (100), étant un dispositif de détection de défaut détectant un défaut présenté dans une partie soudée formée dans le sens de la longueur d'un tuyau en acier soudé, ledit dispositif de détection de défaut comprenant :
une sonde multiéléments (110) installée en dehors d'une surface extérieure du tuyau en acier soudé et pourvue d'une pluralité d'éléments ultrasonores (111) contenus dans celle-ci ;
une unité d'émission (131) prévue pour paramétrer n éléments des éléments ultrasonores étant quelques-uns d'une pluralité des éléments ultrasonores (111) constituant la sonde multiéléments (110), en tant qu'éléments ultrasonores d'émission (112), et pour émettre des faisceaux ultrasonores vers la partie soudée au travers de la surface extérieure du tuyau en acier soudé à partir des éléments ultrasonores d'émission (112) ;
une unité de réception (132) prévue pour recevoir des faisceaux ultrasonores réfléchis étant les faisceaux ultrasonores réfléchis par le tuyau en acier soudé comprenant la partie soudée, via des éléments ultrasonores de réception (114) consistant en m éléments, et comprenant les n éléments des éléments ultrasonores constituant les éléments ultrasonores d'émission (112), m étant supérieur à n, parmi une pluralité des éléments ultrasonores (111) constituant la sonde multiéléments (110) ; et
une unité de détermination de défaut (124) prévue pour déterminer si un défaut est présenté ou non dans la partie soudée sur la base des faisceaux ultrasonores réfléchis reçus par l'unité de réception (132).

2. Dispositif de détection de défaut selon la revendication 1, où
les éléments ultrasonores de réception (114) sont paramétrés au moyen d'un tuyau d'étalonnage, étant un tuyau en acier pour l'étalonnage du tuyau en acier soudé, lequel présente un défaut artificiel formé dans une deuxième partie soudée correspondant à la partie soudée sur la base d'un premier rapport signal-bruit, d'un deuxième rapport signal-bruit, et d'un troisième rapport signal-bruit en fonction de la valeur de m, étant des rapports signal-bruit relatifs aux faisceaux ultrasonores réfléchis acquis en changeant la valeur de m de m éléments des éléments ultrasonores relatifs aux éléments ultrasonores de réception (114) par rapport à n éléments des éléments ultrasonores relatifs aux éléments ultrasonores d'émission (112), le premier rapport signal-bruit étant un rapport signal-bruit relatif aux faisceaux ultrasonores réfléchis par le défaut artificiel dans le cas où la deuxième partie soudée est prévue à un premier emplacement dans la direction circonférentielle du tuyau d'étalonnage par rapport à la sonde multiéléments (110), le deuxième rapport signal-bruit étant un rapport signal-bruit relatif aux faisceaux ultrasonores réfléchis par le défaut artificiel dans le cas où la deuxième partie soudée est prévue à un deuxième emplacement décalé dans le sens horaire du premier emplacement, d'un angle α dans la direction circonférentielle du tuyau d'étalonnage par rapport à la sonde multiéléments (110), et le troisième rapport signal-bruit étant un rapport signal-bruit relatif aux faisceaux ultrasonores réfléchis par le défaut artificiel dans le cas où la deuxième partie soudée est prévue à un troisième emplacement décalé dans le sens antihoraire du premier emplacement, d'un angle β dans la direction circonférentielle du tuyau d'étalonnage par rapport à la sonde multiéléments (110).

3. Dispositif de détection de défaut selon la revendication 2, où
les éléments ultrasonores de réception (114) sont paramétrés sur la base de la valeur de m permettant à la différence entre le premier rapport signal-bruit et le deuxième rapport signal-bruit et/ou à la différence entre le premier rapport signal-bruit et le troisième rapport signal-bruit d'être minimales.

4. Dispositif de détection de défaut selon la revendication 2, où
les éléments ultrasonores de réception (114) sont paramétrés sur la base de la valeur de m permettant à la somme de la différence entre le premier rapport signal-bruit et le deuxième rapport signal-bruit et de la différence entre le premier rapport signal-bruit et le troisième rapport signal-bruit d'être minimale.

5. Dispositif de détection de défaut selon la revendication 3 ou la revendication 4, où
des valeurs de m permettant au premier rapport signal-bruit d'être égal ou supérieur à une valeur seuil prédéterminée sont extraites, la valeur de m devant être minimale est sélectionnée parmi les valeurs de m extraites, et les éléments ultrasonores de réception (114) sont paramétrés sur la base de la valeur de m sélectionnée.

6. Dispositif de détection de défaut selon la revendication 3 ou la revendication 4, où
des valeurs de m permettant au premier rapport signal-bruit, au deuxième rapport signal-bruit, et au troisième rapport signal-bruit d'être égaux ou supérieurs à une valeur seuil prédéterminée sont extraites, la valeur de m devant être minimale est sélectionnée parmi les valeurs de m extraites, et les éléments ultrasonores de réception (114) sont paramétrés sur la base de la valeur de m sélectionnée.

7. Dispositif de détection de défaut selon la revendication 1, où
les éléments ultrasonores de réception (114) sont paramétrés au moyen d'un tuyau d'étalonnage, étant un tuyau en acier pour l'étalonnage du tuyau en acier soudé, lequel présente un défaut artificiel formé dans une deuxième partie soudée correspondant à la partie soudée sur la base d'une première hauteur d'écho, d'une deuxième hauteur d'écho, et d'une troisième hauteur d'écho en fonction de la valeur de m, étant des intensités d'écho relatives aux faisceaux ultrasonores réfléchis acquis en changeant la valeur de m de m éléments des éléments ultrasonores relatifs aux éléments ultrasonores de réception (114) par rapport à n éléments des éléments ultrasonores relatifs aux éléments ultrasonores d'émission (112), la première hauteur d'écho étant une hauteur d'écho relative aux faisceaux ultrasonores réfléchis par le défaut artificiel dans le cas où la deuxième partie soudée est prévue à un premier emplacement dans la direction circonférentielle du tuyau d'étalonnage par rapport à la sonde multiéléments (110), la deuxième hauteur d'écho étant une hauteur d'écho relative aux faisceaux ultrasonores réfléchis par le défaut artificiel dans le cas où la deuxième partie soudée est prévue à un deuxième emplacement décalé dans le sens horaire du premier emplacement, d'un angle α dans la direction circonférentielle du tuyau d'étalonnage par rapport à la sonde multiéléments (110), et la troisième hauteur d'écho étant une hauteur d'écho relative aux faisceaux ultrasonores réfléchis par le défaut artificiel dans le cas où la deuxième partie soudée est prévue à un troisième emplacement décalé dans le sens antihoraire du premier emplacement, d'un angle β dans la direction circonférentielle du tuyau d'étalonnage par rapport à la sonde multiéléments (110).

8. Dispositif de détection de défaut selon la revendication 7, où
les éléments ultrasonores de réception (114) sont paramétrés sur la base de la valeur de m permettant à la différence entre la première hauteur d'écho et la deuxième hauteur d'écho et/ou à la différence entre la première hauteur d'écho et la troisième hauteur d'écho d'être minimales.

9. Dispositif de détection de défaut selon la revendication 7, où
les éléments ultrasonores de réception (114) sont paramétrés sur la base de la valeur de m permettant à la somme de la différence entre la première hauteur d'écho et la deuxième hauteur d'écho et de la différence entre la première hauteur d'écho et la troisième hauteur d'écho d'être minimale.

10. Dispositif de détection de défaut selon la revendication 8 ou la revendication 9, où
des valeurs de m permettant à la première hauteur d'écho d'être égale ou supérieure à une valeur seuil prédéterminée sont extraites, la valeur de m devant être minimale est sélectionnée parmi les valeurs de m extraites, et les éléments ultrasonores de réception (114) sont paramétrés sur la base de la valeur de m sélectionnée.

11. Dispositif de détection de défaut selon la revendication 8 ou la revendication 9, où
des valeurs de m permettant à la première hauteur d'écho, à la deuxième hauteur d'écho, et à la troisième hauteur d'écho d'être égales ou supérieures à une valeur seuil prédéterminée sont extraites, la valeur de m devant être minimale est sélectionnée parmi les valeurs de m extraites, et les éléments ultrasonores de réception (114) sont paramétrés sur la base de la valeur de m sélectionnée.

12. Dispositif de détection de défaut selon l'une des revendications 1 à 11, où
l'unité d'émission (131) émet les faisceaux ultrasonores pour rendre les faisceaux ultrasonores ayant pénétré dans le tuyau en acier soudé au travers de la surface extérieure du tuyau en acier soudé directement incidents sur la partie soudée, sensiblement verticalement sans réflexion sur une surface intérieure du tuyau en acier soudé et les focaliser sur la partie soudée.

13. Procédé de détection de défaut, étant un procédé de détection de défaut par un dispositif de détection de défaut comprenant une sonde multiéléments (110) installée en dehors d'une surface extérieure du tuyau en acier soudé et pourvue d'une pluralité d'éléments ultrasonores (111) contenus dans celle-ci et détectant un défaut présent dans une partie soudée formée dans le sens de la longueur du tuyau en acier soudé, ledit procédé de détection de défaut comprenant :
une étape d'émission où sont paramétrés n éléments des éléments ultrasonores, étant quelques-uns d'une pluralité des éléments ultrasonores (111) constituant la sonde multiéléments (110), en tant qu'éléments ultrasonores d'émission (112), et émis des faisceaux ultrasonores vers la partie soudée au travers de la surface extérieure du tuyau en acier soudé à partir des éléments ultrasonores d'émission (112) ;
une étape de réception où sont reçus des faisceaux ultrasonores réfléchis étant les faisceaux ultrasonores réfléchis par le tuyau en acier soudé comprenant la partie soudée, via des éléments ultrasonores de réception (114) consistant en m éléments, et comprenant les n éléments des éléments ultrasonores constituant les éléments ultrasonores d'émission (112), m étant supérieur à n, parmi une pluralité des éléments ultrasonores (111) constituant la sonde multiéléments (110) ; et
une étape de détermination de défaut où il est déterminé si un défaut est ou non présenté das la partie soudée sur la base des faisceaux ultrasonores réfléchis reçus lors de l'étape de réception.

14. Programme informatique comprenant des instructions entraînant l'exécution par le dispositif selon l'une des revendications 1 à 12 :
d'une transmission étape d'émission où sont paramétrés n éléments des éléments ultrasonores, étant quelques-uns d'une pluralité des éléments ultrasonores (111) constituant la sonde multiéléments (110), en tant qu'éléments ultrasonores d'émission (112), et émis des faisceaux ultrasonores vers la partie soudée au travers de la surface extérieure du tuyau en acier soudé à partir des éléments ultrasonores d'émission (112) ;
d'une étape de réception où sont reçus des faisceaux ultrasonores réfléchis étant les faisceaux ultrasonores réfléchis par le tuyau en acier soudé comprenant la partie soudée, via des éléments ultrasonores de réception (114) consistant en m éléments, et comprenant les n éléments des éléments ultrasonores constituant les éléments ultrasonores d'émission (112), m étant supérieur à n, parmi une pluralité des éléments ultrasonores (111) constituant la sonde multiéléments (110) ; et
d'une étape de détermination de défaut où il est déterminé si un défaut est ou non présenté das la partie soudée sur la base des faisceaux ultrasonores réfléchis reçus lors de l'étape de réception.
